# EUROPEAN PATENT SPECIFICATION

(11) **EP 3 331 282 B1**
(45) Date of publication and mention of the grant of the patent: **16.10.2019**
(21) Application number: 17199269.6
(22) Date of filing: 30.10.2017
(51) Int. Cl.: H04W 40/32, H04L 1/08, H04L 29/08, H04L 12/24, H04W 84/18

(54) **DATA TRANSMISSION METHOD AND APPARATUS**
DATENÜBERTRAGUNGSVERFAHREN UND -VORRICHTUNG
PROCÉDÉ ET APPAREIL DE TRANSMISSION DE DONNÉES

(30) Priority: 01.12.2016 CN 201611093785
(43) Date of publication of application: 06.06.2018
(73) Proprietor: FUJITSU LIMITED, Kanagawa 211-8588 (JP)
(72) Inventor: AO, Chen, Chaoyang District, Beijing 100027 (CN); LI, Hongchun, Chaoyang District, Beijing 100027 (CN); TIAN, Jun, Chaoyang District, Beijing 100027 (CN)
(74) Representative: Haseltine Lake Kempner LLP

(56) References cited:
- US-B1- 9 135 208
- MARWA KHEDHER ET AL: "Enhanced group-based wireless ad-hoc sensor network protocol", INTERNATIONAL JOURNAL OF DISTRIBUTED SENSOR NETWORKS, vol. 12, no. 7, 28 July 2016 (2016-07-28), pages 1-18, XP055465029, ISSN: 1550-1477, DOI: 10.1177/1550147716659427
- DEB B ET AL: "ReInForM: Reliable information forwarding using multiple paths in sensor networks", LOCAL COMPUTER NETWORKS, 2003. LCN '03. PROCEEDINGS. 28TH ANNUAL IEEE INTERNATIONAL CONFERENCE ON 20-24 OCT. 2003, PISCATAWAY, NJ, USA,IEEE, 20 October 2003 (2003-10-20), pages 406-415, XP010666002, DOI: 10.1109/LCN.2003.1243166 ISBN: 978-0-7695-2037-7

## Description

This disclosure relates to the field of communication technologies, and in particular to a data transmission method and apparatus.

As development of wireless communication technologies, information processing technologies, semiconductor technologies and sensor technologies, etc., more and more attention has been paid to a wireless sensor network in recent years, not only in living fields where ordinary people are concerned, environmental monitoring fields and industrial manufacturing fields, but also in military fields, etc.

A wireless sensor network is a wireless data acquisition network structure where a gateway node, a router node (Router) or a relay node (Relay) and a sensor node (Sensor) are connected in a wireless multi-hop manner, and monitored data collected by the sensor node in a target area are transmitted to the gateway node (Gateway) via the router node (or the relay node), and finally obtained and processed by UE.

While application of a wireless sensor network brings convenience to various industries, long-existing problems in a wireless multi-hop network also exist in stability of data transmission; for example, characteristics of environments where nodes need to be deployed are not all identical according to variety of application fields of the wireless sensor network. Due to complexity and variety of the deployment environments, it is inevitable that signals are blocked by obstacles in a transmission path, or subjected to electromagnetic interference of other communication equipment. As existence of factors restricting network performances, both stability of a transmission link and reliability of data transmission cannot be sufficiently guaranteed.

It should be noted that the above description of the background is merely provided for clear and complete explanation of this disclosure and for easy understanding by those skilled in the art. And it should not be understood that the above technical solution is known to those skilled in the art as it is described in the background of this disclosure.

US9135208 discloses systems and methods for group management in machine-to-machine networks. Network nodes in a network group are divided into sub-groups and a group information register, which includes a listing of the nodes in the group, is divided into an equal number of partitions. The partitions are distributed to the sub-groups such that each node in a given sub-group receives the same partition. The partitions are accompanied by references to network nodes of other sub-groups (termed "anchor nodes") that have a copy of another partition of the group information register. When a new network head takes over the network group, it is able to use the available partitions to determine which partitions are missing and which nodes hold copies of the missing partitions. The group head can wake up the missing nodes and obtain the missing partition copies, thereby generating a complete copy of the group information register.

Marwa Khedher et al., "Enhanced group-based wireless ad-hoc sensor network protocol," INTERNATIONAL JOURNAL OF DISTRIBUTED SENSOR NETWORKS, vol. 12, no. 7, 28 July 2016 (2016-07-28), pages 1-18, proposes an improved group-based architecture for wireless ad-hoc sensor networks.

Budhaditya Deb et al., "RelnForM: Reliable information forwarding using multiple paths in sensor networks," LCN '03 Proceedings of the 28th Annual IEEE International Conference on Local Computer Networks, October 20-24, 2003, pages 406-415, describe a protocol called ReInForM to deliver packets at desired reliability at a proportionate communication cost.

In order to solve the problems discussed above, it is desirable to provide a data transmission method and apparatus, such that sensor data may be guaranteed to be completely transmitted to a target node

The present invention is defined in the independent claims. The dependent claims define particular embodiments of the invention.

According to a first aspect of the embodiments of this disclosure, there is provided a data transmission method, applicable to a router node in a target monitoring area, the method including:
the router node broadcasts a group information packet, so that a sensor node receiving the group information packet joins in a relevant node group where the router node is located or takes a relevant node group where the router node is located as a candidate group;
wherein, the group information packet includes group identification information and a group node sequence.

According to a second aspect of the embodiments of this disclosure, there is provided a data transmission method, applicable to a sensor node in a target monitoring area, the method including:
the sensor node receives a group information packet, the group information packet including group identification information and a group node sequence; and
the sensor node joins in a relevant node group indicated by the group identification information or takes a relevant node group indicated by the group identification information as a candidate group and saves the candidate group according to the received group information packet.

According to a third aspect of the embodiments of this disclosure, there is provided a data transmission apparatus, configured in a router node in a target monitoring area, the apparatus including:
a first transmitting unit configured to broadcast a group information packet, so that a sensor node receiving the group information packet joins in a relevant node group where the router node is located or takes a relevant node group where the router node is located as a candidate group;
wherein, the group information packet includes group identification information and a group node sequence.

According to a fourth aspect of the embodiments of this disclosure, there is provided a data transmission apparatus, configured in a sensor node in a target monitoring area, the apparatus including:
a receiving unit configured to receive a group information packet, the group information packet including group identification information and a group node sequence; and
a managing unit configured to join in a relevant node group indicated by the group identification information or take a relevant node group indicated by the group identification information as a candidate group and save the candidate group according to the received group information packet.

According to a fifth aspect of the embodiments of this disclosure, there is provided a router node, including the apparatus as described in the third aspect.

According to a sixth aspect of the embodiments of this disclosure, there is provided a sensor node, including the apparatus as described in the fourth aspect.

An advantage of this disclosure exists in that with the embodiments of this disclosure, sensor data may be guaranteed to be completely transmitted to a target node.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of the present disclosure, which constitute a part of the specification and illustrate the preferred embodiments of the present disclosure, and are used for setting forth the principles of the present disclosure together with the description.

The invention is described, by way of example only, with reference to the following drawings, in which:
FIG. 1 is a schematic diagram of a sensor network colleting some relevant data of target monitoring areas;
FIG. 2 is a schematic diagram of data integration by a gateway node;
FIG. 3 is a schematic diagram of data integration by a router node in a target monitoring area;
FIG. 4 is a flowchart of a data transmission method of Embodiment 1;
FIG. 5 is a schematic diagram of group information packets transmitted by router nodes in three target monitoring areas shown in FIG. 1;
FIG. 6 is a schematic diagram of router nodes neighboring each other in two target monitoring areas;
FIG. 7 is a schematic diagram of router nodes not in a neighboring relationship in two target monitoring areas;
FIG. 8 is a schematic diagram of collecting data by router nodes;
FIG. 9 is a flowchart of a data transmission method of Embodiment 2;
FIG. 10 is a schematic diagram of processing by a sensor node after receiving the group information packet;
FIG. 11 is a schematic diagram of one implementation of starting a failure data transmission guarantee mechanism by the sensor node;
FIG. 12 is a schematic diagram of another implementation of starting a failure data transmission guarantee mechanism by the sensor node;
FIG. 13 is a flowchart of a method for selecting backoff timers of sensor nodes;
FIG. 14 is a schematic diagram of interaction of an example of a data transmission process;
FIG. 15 is a flowchart of operations corresponding to the data transmission process shown in FIG. 14;
FIG. 16 is a schematic diagram of interaction of another example of the data transmission process;
FIG. 17 is a flowchart of operations corresponding to the data transmission process shown in FIG. 16;
FIG. 18 shows four network morphologies of the sensor node when data transmission failure occurs;
FIG. 19 is a schematic diagram of a data transmission apparatus of Embodiment 3;
FIG. 20 is a schematic diagram of a router node of Embodiment 3;
FIG. 21 is a schematic diagram of a data transmission apparatus of Embodiment 4; and
FIG. 22 is a schematic diagram of a sensor node of Embodiment 5;

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In a wireless sensor network, a router node (or a relay node) functions as a bridge between a sensor node and a gateway node; wherein, the sensor node in the network needs to be connected to the router node (or the relay node), and data collected by the sensor node in a target monitoring area are stably and reliably transmitted by the router node (or the relay node) to the gateway node.

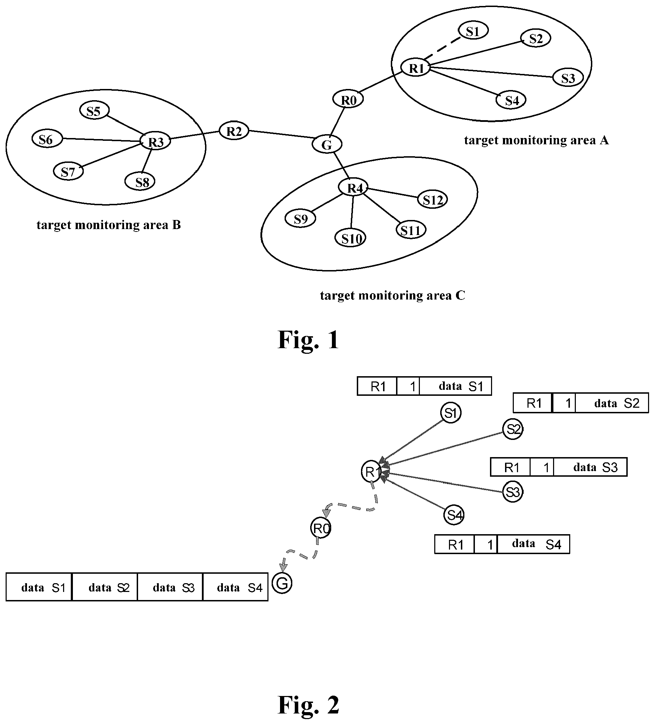

FIG. 1 is a schematic diagram of a sensor network colleting some relevant data of target monitoring areas. As shown in FIG. 1, G (Gateway) is a gateway node, Si (Sensor) is a sensor node, and Rj (Router or Relay) is a router node (or a relay node). The network is responsible of collecting data from three target monitoring areas: a target monitoring area A, a target monitoring area B and a target monitoring area C. In each target monitoring area, several router nodes Si collect data of areas respectively, and transmit the data respectively to router nodes (or relay nodes) deployed near the monitoring areas, and the data are finally transmitted to the gateway node via other intermediate router nodes (or relay nodes).

In some application scenarios, a user end has higher requirements on relevance, integrity and accuracy of the collected data. Each group of data collected by data collection nodes are dispensable during being transmitted to a gateway. If data deletion exists during data uploading, final accuracy of whole data may severely be degraded, thereby bringing relatively large influence to judgment of environmental conditions by users.

Taking target monitoring area A shown in FIG. 1 as an example, sensor nodes S1, S2, S3 and S4 respectively collect relevant data within respective sensing ranges, and transmit the data to router node (or relay node) R1. In order to guarantee integrity and accuracy of the data within the area, data collected by each sensor node within target monitoring area A cannot be missed during the uploading. Assuming that data transmission failure occurs during transmission of data from sensor node S1 within target monitoring area A to router node R1, for example, data from sensor node S1 cannot always reach router node (or relay node) R1 and cannot be uploaded to gateway node G, even though data collected by other sensor nodes S2, S3 and S4 within target monitoring area A are integrally transmitted to router node (or relay node) R1 and uploaded to gateway node G, accuracy and reliability of the data within target monitoring area A as well as judgment of environmental conditions by users will all be relatively greatly influenced.

Hence, the data collected by the sensor nodes applied in these demands all have certain relevance, and data from any sensor node should not be missed. And if data from a sensor node is missed during transmission, accuracy and reliability of contents of the whole data will be lowered.

In this embodiment, sensor nodes refer to a type of sensor nodes performing data collection to obtain specific data information or the same type of data, such as sensor nodes collecting GPS information or geographical information, etc.

In some applications, as shown in FIG. 2, a certain number of sensor nodes (S1, S2, S3 and S4) in the same area need to coordinate to respectively transmit collected respective relevant data to the same router node (or relay node) R1 in the area via respective paths, and the router node (or the relay node) R1 relays the received data in the area to the gateway node G, and the relevant data collected by each sensor node within the area are integrated, sorted and analyzed at the user end, so as to obtain integral information within the area.

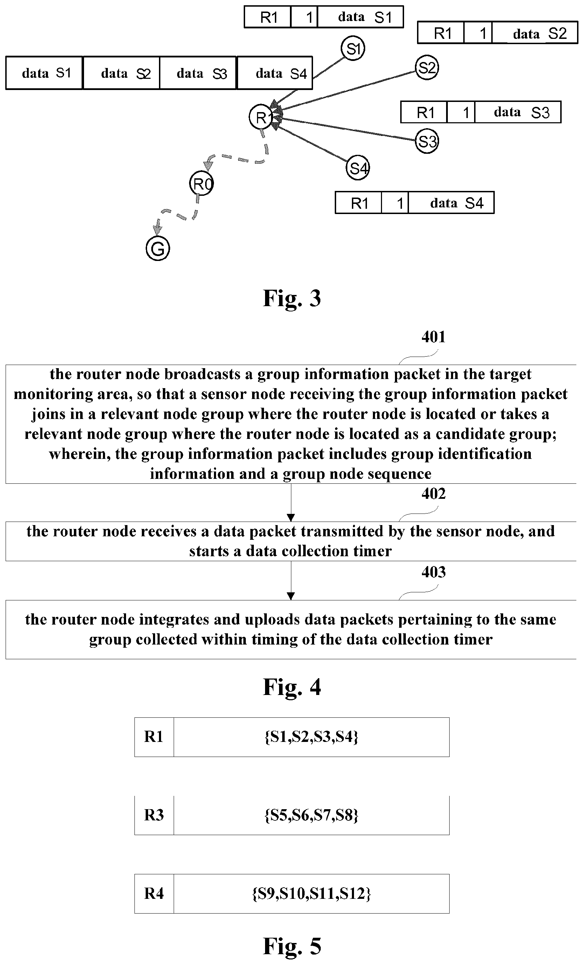

For another example, in some applications, as shown in FIG. 3, sensor nodes (S1, S2, S3 and S4) in a target monitoring area respectively transmit data collected respectively by them to the same router node (or relay node) R1 in the area via respective links between them and the router node (or relay node) R1, and the router node (or relay node) R1 first performs integration on the data (such as compression, fusion, etc.), and then uploads the integral information obtained in the area to the gateway node G.

Hence, it is proposed in this disclosure that it is guaranteed that data from each sensor node are integrally and stably transmitted to the user end in the monitoring areas.

Various embodiments of this disclosure shall be described below with reference to the accompanying drawings. These embodiments are illustrative only, and are not intended to limit this disclosure.

### Embodiment 1

The embodiment provides a data transmission method, applicable to a router node, or another node having a routing or relay function, in a target monitoring area in a wireless sensor network. The router node may also be referred to as a relay node, and shall be collectively referred to as a router node in the following description.

FIG. 4 is a flowchart of the data transmission method. As shown in FIG. 4, the data transmission method includes:
step 401: the router node broadcasts a group information packet in the target monitoring area, so that a sensor node receiving the group information packet joins in a relevant node group where the router node is located or takes a relevant node group where the router node is located as a candidate group; wherein, the group information packet includes group identification information and a group node sequence.

In this embodiment, each relevant node group corresponds to a target monitoring area, and there exist multiple sensor nodes and at least one router node in each target monitoring area. As described above, data collected by the sensor nodes in each target monitoring area have relevance, and these sensor nodes may provide the collected data to the router node in the target monitoring area, and the router node integrates the data or relay the data to a gateway node for integration, so as to integrally provide the data to a user end.

In this embodiment, in order to guarantee stable transmission of the data, at an initial stage of the network, each router node (which is a non-intermediate router node) in the target monitoring area may broadcast the group information packet in a one-hop range, the group information packet being used to notify each sensor node receiving the group information packet of a range to which it pertains.

In this embodiment, the group information packet may include group identification information (Group Identification), the group identification information being an identification of a relevant node group where the router node is located, which may be an address of a current router node, or may also be a special identification (ID) different from other router nodes.

In this embodiment, the group identification packet may further include a group node sequence, the group node sequence containing identifications of the sensor nodes contained in the relevant node group where the router node is located, which may be IDs or addresses of sensor nodes having data relevance in the same target monitoring area. The group node sequence is used to notify sensor nodes which are located within a one-hop range of a current router node and node information of which is contained in the group node sequence that it is within a range of the relevant node group identified by the router node, and is also used to differentiate sensor nodes in other areas having different group identification information.

FIG. 5 illustrates group information packets broadcasted by router nodes R1, R3 and R4 in three target monitoring areas A, B and C shown in FIG. 1.

In this embodiment, the router nodes broadcast the group information packets, and may make sensor nodes pertaining to the relevant node group where it is located to join in the relevant node group, thereby guaranteeing data collected by the sensor nodes within the relevant node group are integrally transmitted to a target node, such as the router node or the gateway node. A method for joining in the relevant node group by the sensor nodes shall be described in Embodiment 2. Processing the data collected by the sensor nodes by the router node shall be described below.

Furthermore, as it is also possible that sensor nodes not pertaining to the relevant node group where the router node is located receive the group information packets, when the number of candidate groups of this type of sensor nodes does not reach an upper limit of the preset number of candidate groups, this type of sensor nodes may take the relevant node group as their candidate group, such that when this type of sensor nodes fail in transmission and group nodes of which cannot also succeed in relaying the data collected by them, the data collected by them are relayed by the candidate group, so as to guarantee that the data collected by sensor nodes in the relevant node group where they are located are integrally to a target node. Processing by this type of sensor nodes shall be described in Embodiment 2.

In the wireless sensor network, transmission failure may occur when a sensor node uploads data to a router node. Still taking sensor node S1 in FIG. 1 as an example, if data cannot reach the router node R1 in the group to which sensor node S1 pertains after sensor node S1 performs K times of data retransmission, such type of sensor node is referred to as a transmission failed node (TFN). In the embodiments of this disclosure, transmission failure refers to a transmission failed obstruction of data uploaded by a sensor node occurring in a transmission path, but not refers to transmission failure of the sensor node itself due to node failure, such as a hardware damage, or a software problem, etc.

In one implementation of this embodiment, if data transmission failure occurs in a sensor node, for example, the sensor node still cannot upload a packet collected by it to the router node after the sensor node performs K times of data retransmission, the sensor node being taken as a transmission failed node, may broadcast a retransmission data packet, and start a timer. On the one hand, if the router node receives the broadcasted retransmission data packet, it shows that transmission of the retransmission data packet succeeds; and on the other hand, if the router node does not receive the retransmission data packet, other sensor nodes within the group may relay the data collected by the transmission failed node for it when they receive the retransmission data packet, thereby achieving integral transmission of the data collected by the transmission failed node.

In this implementation, when the router node receives the retransmission data packet transmitted by broadcast by the transmission failed node within the relevant node group where it is located, the router node may transmit by broadcast a transmission success response. By transmitting the transmission success response, the transmission failed node may be notified that its retransmission data packet has been successfully received. And furthermore, other sensor nodes within the relevant node group where it is located may also be notified that they are not needed to relay a backup data packet for the transmission failed node. Hence, with the retransmission data packet, integral transmission of the data collected by the transmission failed node may be achieved.

In this implementation, the retransmission data packet may include data source node information (source node information), group identification information, collected data, a data batch sequence number, and transmission failure identification (failure data identification), etc. The data source node information indicates a source node transmitting the retransmission data packet, i.e. the transmission failed node. The group identification information indicates a relevant node group where the source node is located. The collected data indicate the data collected by the transmission failed node. The data batch sequence number indicates a sequence of the above collected data in a data group. And the transmission failure identification indicates that the above collected data are transmission failed data. What described above is an example of the retransmission data packet; however, this embodiment is not limited thereto.

In this implementation, the transmission success response may include group identification information, data source node information (original data source), and a data batch sequence number, etc. The group identification information indicates a relevant node group where the router node is located. The data source node information indicates a source node of the retransmission data packet replied by the transmission success response, i.e. the transmission failed node. And the data batch sequence number indicates a sequence of a data group to which the above collected data in the retransmission data packet received by the router node pertain. What described above is an example of the transmission success response; however, this embodiment is not limited thereto.

In another implementation of this embodiment, if data transmission failure occurs in a sensor node, other sensor nodes in the group relay data collected by the sensor node for it. For example, the data collected by the transmission failed node cannot reach the router node in the group by broadcasting the above retransmission data packet.

In this implementation, when the router node receives the backup data packet transmitted by unicast by the sensor node within the relevant node group where it is located, the router node may transmit by broadcast a backup transmission success notification. By transmitting the backup transmission success notification, the sensor node transmitting the backup data packet may be notified that the backup data packet transmitted by it has been successfully received. Hence, with other sensor nodes within the group, integral transmission of the data collected by the transmission failed node may be achieved.

In this implementation, the backup data packet may include local node information (local source node), data source node information (original data source), group identification information, collected data, a data batch sequence number, and transmission failure identification (failure data identification), etc. The local node information indicates a source node transmitting the backup data packet, i.e. the above sensor node. The data source node information indicates a source node of the backup data, i.e. the above transmission failed node. The group identification information indicates a relevant node group where the sensor node is located. The collected data indicate data backed up by the sensor node and collected by the transmission failed node. The data batch sequence number indicates a sequence of a data group to which the above collected data pertain. And the transmission failure identification indicates that the above collected data are transmission failed data. What described above is an example of the backup data packet; however, this embodiment is not limited thereto.

In this implementation, the backup transmission success notification may include group identification information, data source node information (original data source), and a data batch sequence number, etc. The group identification information indicates a relevant node group where the router node is located. The data source node information indicates a source node transmitting the backup transmission success notification, i.e. the router node. And the data batch sequence number indicates a sequence of a data group to which the above collected data in the backup data packet received by the router node pertain. What described above is an example of the backup transmission success notification; however, this embodiment is not limited thereto.

In another implementation of this embodiment, if data transmission failure occurs in a sensor node, a node out of the group, such as a router node of a backup group of the sensor node, relays data collected by the sensor node for it. For example, the data collected by the sensor node cannot reach the router node in the group by broadcasting the above retransmission data packet by the sensor node or unicasting the above backup data packet by other sensor nodes in the group.

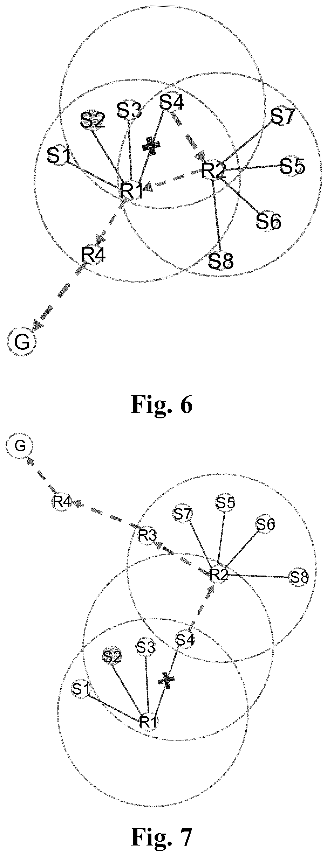

In this implementation, as shown in FIG. 6, when router node R2 receives a data relay request packet transmitted by unicast by a transmission failed node S4 within another relevant node group, if router node R2 is in a neighboring relationship with a router node R1 of a relevant node group where the transmission failed node S4 is located, router node R2 relays collected data in the data relay request packet to router node R1 of the relevant node group where the transmission failed node S4 is located; and as shown in FIG. 7, if router node R2 is in a non-neighboring relationship with a router node R1 of a relevant node group where the transmission failed node S4 is located, router node R2 uploads the collected data in the data relay request packet to the gateway G. Hence, with nodes out of the group, integral transmission of the data collected by the transmission failed node may be achieved.

In this implementation, the data relay request packet may include group identification information, data source node information (original data source), original group identification information (group identification), collected data, a data batch sequence number, and transmission failure identification (failure data identification), etc. The group identification information indicates a relevant node group where the router node is located. The data source node information indicates a transmission failed node transmitting the above data relay request packet. The original group identification information indicates the relevant node group where the transmission failed node transmitting the above data relay request packet is located. The collected data indicate the data collected by the transmission failed node. The data batch sequence number indicates a sequence of a data group to which the above collected data pertain. The transmission failure identification indicates that the above collected data are transmission failed data. What described above is an example of the data relay request packet; however, this embodiment is not limited thereto.

In this implementation, if the router node receives an out-of-group data relay request (i.e. a data relay request packet) transmitted by a sensor node, it checks the group identification information first, proceeds with checking other contents in the packet if the group identification information is in consistence with information of the group of itself, and according to group information identified by the original group identification information, sensor node information identified by the data source node information, data group information identified by the data batch sequence number and data attribute information identified by the transmission failure identification, acknowledges that data carried by the received packet are collected data failed in being transmitted by a sensor node out of the group and the collected data are part of data in a group of uploaded data identified by the data batch sequence number.

If a selected candidate router node is in a non-neighboring relationship with an original target router node of the transmission failed node, or an application does not require that data are uploaded after being integrated and compressed by a router node, as shown in FIG. 7, the candidate router node uploads the transmission failed data to the gateway node via its upload path. The gateway node or the user end may perform integration on the transmission failed data and uploaded data of the same data group from identical relevant node group, according to the original group identification information, data source node information and the data batch sequence number carried in the packet.

If a selected candidate router node and the original target router node of the transmission failed node are neighboring each other, as shown in FIG. 6, the candidate router node relays the data packet to the original router node. If a sensor data waiting timer T₀ set by the original router node for the group of data does not expire, the data are received and uploaded by the original router node. And if the sensor data waiting timer T₀ set by the original router node for the group of data expires, the candidate router node uploads the transmission failed data to the gateway node via its existing upload path. The gateway node or the user end may perform integration on the transmission failed data and uploaded data of the same data group from identical relevant node group, according to the original group identification information, data source node information and the data batch sequence number carried in the packet.

In this embodiment, according to an application demand, when there exist data needing to be uploaded, if it is specified in the application that before each time of data transmission, a router node is required that relevant data collected by sensor nodes in a covering target area within a period of time are integrally uploaded only after being integrated. In this embodiment, as shown in FIG. 4, the method may further include:
step 402: the router node receives a data packet transmitted by the sensor node, and starts a data collection timer; and
step 403: the router node integrates and uploads data packets pertaining to the same group collected within timing of the data collection timer.

In this embodiment, the route node may start a group data collection timer in an application layer, with a set timing length being T₀. When relevant data in the same group collected by all sensor nodes within an area reach the router node in a range of the set timing length of the timer, the router node terminates the timer, and integrates and uploads data collected by sensors pertaining to the same group. If the router node, within the set timing length of the timer, does not integrally collect the data collected by the sensor nodes in the group, the router node will integrate the data that are not integrally received and upload the data to the gateway node or the user end, then the gateway node or the user end will wait for missed data in the same group uploaded via other paths, and integrate the data in the same group by checking the group identification information, data source node information and the data batch sequence number, etc., carried in the packet.

In this embodiment, if it is not specified in an application requirement that data uploaded by sensors in an area must be uploaded only after being integrated by a router node, the router node will not need to start a group data collection timer, upload collected data of the sensors in the area one by one, when the data reach the gateway node or the user end, the gateway node or the user end will find corresponding relevant data by checking the group identification information, data source node information and the data batch sequence number, etc., carried in the data packet, and then integrate the data.

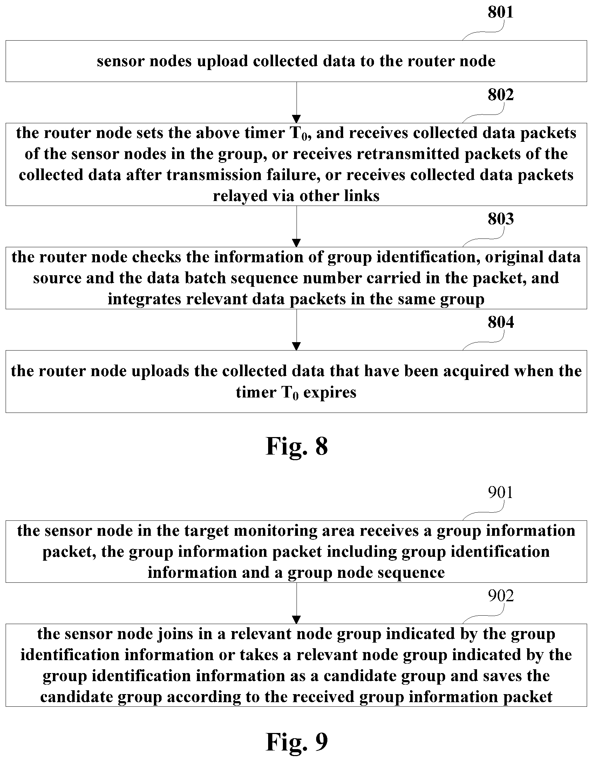

FIG. 8 is a schematic diagram of operations of the router node. As shown in FIG. 8, the operations include:
step 801: sensor nodes upload collected data to the router node;
step 802: the router node sets the above timer T₀, and receives collected data packets of the sensor nodes in the group, or receives retransmission data packets of the collected data after transmission failure, or receives collected data packets relayed via other links;
step 803: the router node checks the group identification information, data source node information and the data batch sequence number carried in the packet, and integrates relevant data packets in the same group; and
step 804: the router node uploads the collected data that have been acquired when the timer T₀ expires.

With the method of this embodiment, in a case where the transmission of a sensor node fails, the data collected by it may be integrally transmitted to the router node or the gateway node via the retransmission data packets, or via other sensor nodes in the group, or via nodes out of the group, thereby guaranteeing integral transmission of the data, and being simple in implementation.

### Embodiment 2

The embodiment provides a data transmission method, applicable to a sensor node in a target monitoring area. This method is processing by a sensor node corresponding the method of Embodiment 1, with contents identical to those in Embodiment 1 being not going to be described herein any further.

FIG. 9 is a schematic diagram of the data transmission method of this embodiment. As shown in FIG. 9, the method includes:
step 901: the sensor node in the target monitoring area receives a group information packet, the group information packet including group identification information and a group node sequence; and
step 902: the sensor node joins in a relevant node group indicated by the group identification information or takes a relevant node group indicated by the group identification information as a candidate group and saves the candidate group according to the received group information packet.

In step 901, the group information packet has been described in Embodiment 1, the contents of which being incorporated herein, and being not going to be described herein any further.

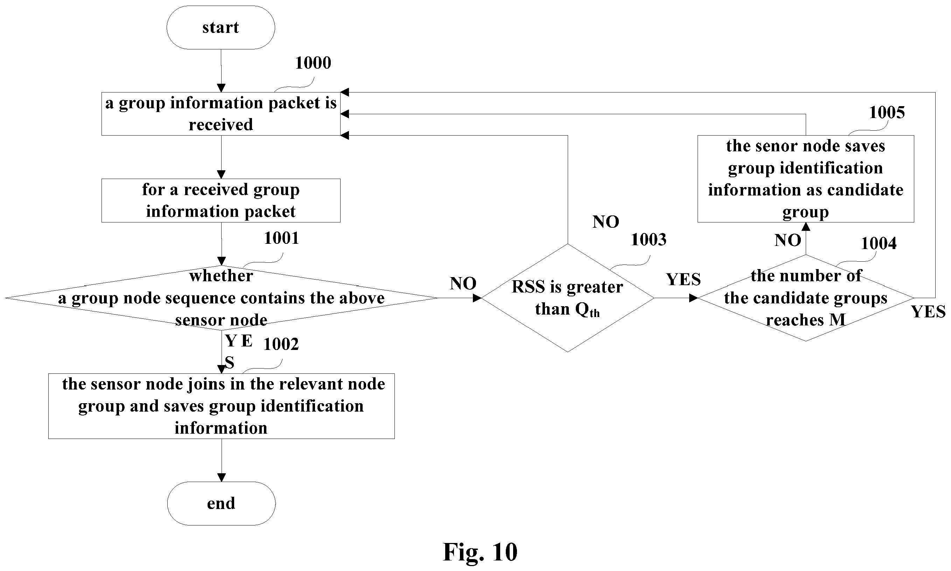

In step 902, the process may be carried by using a method shown in FIG. 10. As shown in FIG. 10, the process includes:
step 1000: a group information packet is received;
step 1001: it is judged whether a group node sequence in the received group information packet contains the above sensor node, and step 1002 is executed if it is judged yes, otherwise, step 1003 is executed;
step 1002: the sensor node joins in the relevant node group indicated by the group identification information of the group information packet;
step 1003: it is judged whether a received signal strength (RSS) of the group information packet is greater than a predetermined threshold (Qₜₕ), and step 1004 is executed if it is judged yes, otherwise, step 1000 is executed;
step 1004: it is judged whether the number of storage items of the candidate groups of the sensor node reaches an upper limit (M), and step 1000 is executed if it is judged yes, otherwise, step 1005 is executed;
step 1005: the sensor node takes the relevant node group indicated by the group identification information in the group information packet as a candidate group and saves the candidate group.

As shown in FIG. 10, if a sensor node receives a group information packet broadcasted by a router node, it may first check group node sequence information to look up whether information of current sensor node is contained in the group node sequence. If the information of current sensor node is contained in the group node sequence, the sensor node will save group identification information in a current group information packet, acknowledge that it pertains to the group, join in a relevant node group identified by current group identification information, and stop proceeding with receiving group information packets broadcasted by any router node. In checking the group node sequence information, if a current sensor node finds that information of current sensor node is not contained in the group node sequence, that is, a group information packet received by the current sensor node is a group information packet broadcasted by a router node in another area, the current sensor node will compare a received signal strength (RSS) of the group information packet with a predetermined threshold (a signal strength threshold Qₜₕ of a link of a candidate group).

If the received signal strength of the current group information packet is greater than Qₜₕ, the current sensor node will look up further whether the number of storage items of the candidate groups saved by the current sensor node reaches limit value M of a specified number. And if the number of storage items of the candidate groups saved currently is still less than M, the current sensor node will save group identification information carried by the current group information packet, and take a relevant node group to which the node out of the area pertain as a candidate group for data uploading, and deem the router node as a candidate router node (Candidate Router), and proceed with waiting for receiving other group information packets.

In this implementation, before a sensor node joins in any group, it may receive a certain number of group information packets broadcasted by other router nodes, and save group identification information and relevant router node information in the packets. In this implementation, it is specified that the number of storage items should not exceed M groups. If the number of currently saved candidate groups reaches a limit value of a specified number, no operation is performed on information in group information packets from the router nodes in another area, and group identification information carried by the group information packets is not saved. The sensor node will proceed with waiting for receiving other group information packets, until a group information packet containing information on the sensor node itself broadcasted by a router node is received, and join in a relevant node group. In this implementation, information on the candidate group may be saved, and when data transmission obstruction occurs in a group where the sensor node is located and there exists no other candidate transmission paths in the group, the saved information may be taken as an out-of-group candidate data transmission path of the sensor node for selection.

If the received signal strength of the current group information packet is not greater than Qₜₕ, no operation is performed on the group information packets, and the sensor node will proceed with receiving other group information packets until a group information packet containing information on the current sensor node broadcasted by a router node is received, and the sensor node will join in a relevant node group corresponding to the router node.

In this embodiment, the information on the candidate group saved by the sensor node may include group identification information and link quality, the group identification information being an address of a currently received out-of-group router node or ID of the group differentiating from the router node of other groups, and the link quality being a received signal strength value (RSS) between a current sensor node and an out-of-group router node, and being used to indicate a connection level and data transmission quality of the link.

In this embodiment, as described above, in the wireless sensor network, during the sensor node uploads data to the router node, transmission failure may occur. In this implementation, such type of a sensor node is referred to as a transmission failed node (TFN). Transmission failure here refers to a transmission failed obstruction of data transmitted by a sensor node occurring in a transmission path, but not refers to transmission failure of the sensor node itself due to node failure, such as a hardware damage, or a software problem, etc.

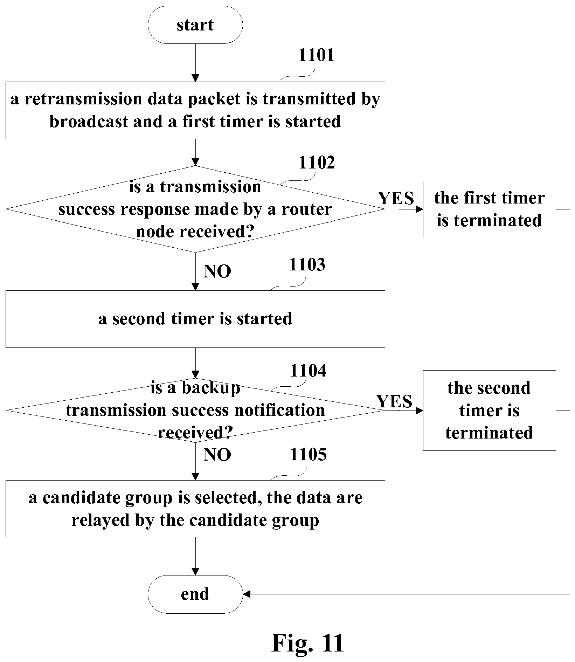

In one implementation of this embodiment, as described above, if data transmission failure occurs in the sensor node, that is, the sensor node is taken as a transmission failed node, a failed data transmission guarantee mechanism may be started. FIG. 11 is a flowchart of the method. Referring to FIG. 11, the method includes:
step 1101: a retransmission data packet is transmitted by broadcast and a first timer is started;
step 1102: it is judged whether a transmission success response made by a router node is received within timing of the first timer, and the first timer is terminated if it is judged yes, otherwise, step 1103 is executed;
step 1103: a second timer is started;
step 1104: it is judged whether a backup transmission success notification is received within timing of the second timer, and the second timer is terminated if it is judged yes, otherwise, step 1105 is executed;
step 1105: a candidate group is selected from stored candidate groups, and the collected data are transmitted to a router node of the selected candidate group, so as to relay the collected data via the router node of the selected candidate group.

In step 1101, if failure occurs in data transmission from the sensor node to a target router node, the transmission failed node will start a broadcast transmission mode to transmit previous transmission failed data to an MAC layer for performing broadcast retransmission. The sensor node may transmit by broadcast a retransmission data packet (Retransmission Data) to nodes around. Contents of the retransmission data packet are as described above, in which source node information indicates a source node currently transmitting the failed data packet, group identification information is information on a pertaining relevant node group saved by a current node in the above-described steps or information on a pertaining router node, collected data are sensor collected data carried in the data packet failed previously in transmission after K times of transmission, a data batch sequence number is used to identify a number of group of data to which the transmission data pertained and uploaded in the area, and a transmission failure identification is used to identify and notify a target node that attributes of collected data transmitted in the current packet are data failed in being previously transmitted by corresponding data sources in the packet.

In steps 1101-1102, after starting broadcasting retransmission data, the sensor node will start at the same time a transmission success response waiting timer, referred to as a first timer, a waiting time length of the timer being set to be T₁ second, T₁≈2T+θ; where, T is a time length within a one-hop range of data transmission, θ is a selectable constant, and *θ* << *T*. Hence, T₁ is taken as a waiting time length for waiting for broadcasting a transmission success response by the router node after receiving the retransmission data packet, which is about a time length needed in transmitting a data packet in a two-hop range. If a target router node succeeds in feeding back a transmission success response (as described above) to a current transmission failed node in a time length defined by the first timer, the transmission failed node will terminate the first timer which is still running.

In step 1103, if the sensor node does not receive the transmission success response made by the router node within the timing of the first timer, it will start a second timer, so as to wait for receiving the backup transmission success notification from a router node or another sensor node in the same group.

In step 1105, if the transmission success response is not received within the timing of the first timer, it shows that the router node does not receive the retransmission data packet, and another node, such as an intra-group neighboring node, or an out-of-group node, is needed to assist in relaying. Hence, the second timer may be set, and if the backup transmission success notification is received within the timing of the second timer, it shows that an intra-group sensor node succeeds in assisting in relaying; otherwise, a candidate group needs to be selected from the candidate groups to assist in relaying.

In step 1105, if the sensor node does not receive the backup transmission success notification within the timing of the second timer, it selects a candidate group from the saved candidate groups, and transmits the collected data to a router node of the selected candidate group, so as to relay the collected data by the router node in the candidate group. Such a process is also referred to as a candidate mechanism, which shall be described below.

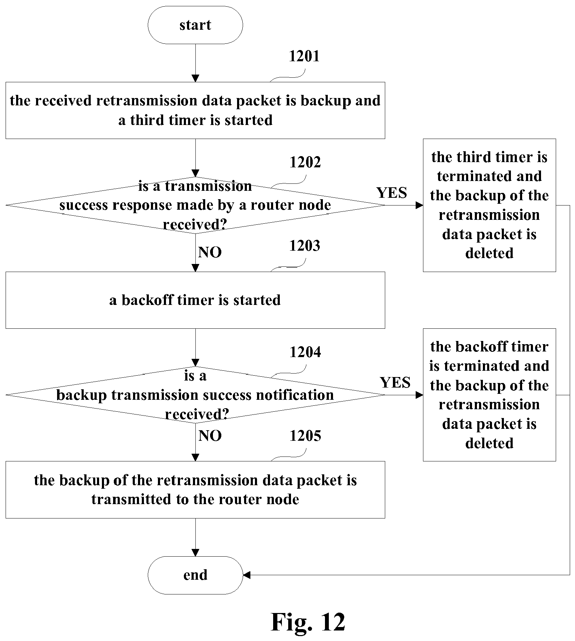

In one implementation of this embodiment, as described above, if the sensor node receives the retransmission data packets transmitted by broadcast by other sensor nodes in the relevant node group where it is located, it shows that another sensor node in the group requests the sensor node to assist in relaying, that is, the sensor node is taken as an intra-group neighboring node around the transmission failed node, and may start the failed data transmission guarantee mechanism. FIG. 12 is a flowchart of the method. Referring to FIG. 12, the method includes:
step 1201: the received retransmission data packet is backup and a third timer is started;
step 1202: it is judged whether the sensor node receives within timing of the third timer a transmission success response made by a router node, the third timer is terminated and the backup of the retransmission data packet is deleted if it is judged yes, otherwise, step 1203 is executed;
step 1203: a backoff timer is started;
step 1204: it is judged whether a backup transmission success notification transmitted by broadcast by the router node is received within timing of the backoff timer, the backoff timer is terminated and the backup of the retransmission data packet is deleted if it is judged yes, otherwise, step 1205 is executed; and
step 1205: the backup of the retransmission data packet is transmitted to the router node.

In step 1201, the transmission failed node retransmits by broadcast the data packet failed in being transmitted by it (referred to as a retransmission data packet), and if an intra-group neighboring node around the transmission failed node receives the retransmission data packet, the neighboring node first checks whether group identification information carried in the retransmission data packet is in consistence with group identification information saved by the current neighboring node, so as to determine whether a source node of the received broadcasted information (the above retransmission data packet) is a sensor node pertaining to the same relevant node group as the current neighboring node. If the current neighboring node receiving the retransmission data packet pertains to the same relevant node group as the source node, it is acknowledged that currently received data carried in the retransmission data packet are transmission failed data of the source node in the current retransmission data packet, and the neighboring node may back up and save the currently received retransmission data packet. The backup information may include data source node information, group identification information, collected data, and a data batch sequence number, and this embodiment is not limited thereto.

In step 1201, while backing up relevance information on failed data, the neighboring node may start a transmission success waiting timer, referred to as a third timer, a time length of the timer being set to be T₂ seconds, so as to wait for a transmission success response made by the router node by broadcast after successfully receiving the retransmission data packet transmitted by the transmission failed node. T₂≈T+δ; where, T is a time length within a one-hop range of data transmission, δ is a constant, and *δ* << *T.* A time length of T₂ is set to be about a time length needed in transmitting a data packet in a one-hop range.

In step 1202, if the above sensor node (the neighboring node of the transmission failed node) receives the transmission success response made by the router node within timing T₂ of the third timer, that is, the retransmission data packet transmitted by broadcast by the transmission failed node is successfully received by the router node, the neighboring node may terminate the third timer that does not expire, and delete the saved backup of the retransmission data packet, that is, deleting saved backup information on the relevant data previously failed in transmission by the transmission failed node.

In step 1203, if the above sensor node (the neighboring node of the transmission failed node) does not receive the transmission success response made by the router node within timing T₂ of the third timer, that is, the retransmission data packet transmitted by broadcast by the transmission failed node is not successfully received by the router node, the neighboring node may start the backup timer, and wait for expiration of a backoff time of itself.

In step 1204, if the backup transmission success notification transmitted by broadcast by the router node is received within the timing of the backoff timer, it shows that other neighboring nodes of the transmission failed node assist in relaying the data, and the sensor node may terminate the backoff timer of itself, and delete the backup of the above retransmission data packet.

In step 1205, if the backup transmission success notification transmitted by broadcast by the router node is not received within the timing of the backoff timer, it shows that other neighboring nodes do not assist the transmission failed node in relaying the data within the backoff time of itself, and the sensor node may transmit the backup of the above retransmission data packet to the router node, and assist the transmission failed node in relaying the data.

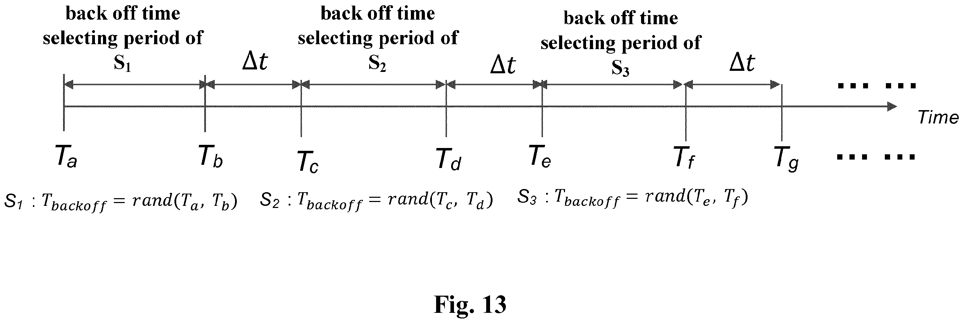

In this implementation, all neighboring nodes in the same group will start a backoff mechanism, time lengths of backoff timers of the sensor nodes are random, and an interval between selection intervals of the time lengths of the backoff timers of the sensor nodes is a time length needed in transmitting a data packet in a two-hop range. For example, a backoff time length of each neighboring node in a group is T_{backoff}=T_{rand}; where, *T_{rand}* is a random time within a period of time [Tₓ,T_{y}], that is, *T_{rand}* = *rαnd(Tₓ, T_{y}),* and the selection intervals of the backoff time lengths of the neighboring nodes in a group are spaced apart by Δt; where, Δt=2T, and T is a time length within a one-hop range of data transmission. Taking that there exist three sensor nodes S₁, S₂ and S₃ in a group as an example, a backoff time length of S₁ is T_{backoff}=rand(Tₐ,T_{b}), a backoff time length of S₂ is T_{backoff}=rand(T_{c},T_{d}), and a backoff time length of S₃ is T_{backoff}=rand(Tₑ,T_{f}); a delay interval between random selection intervals of backoff time lengths of the neighboring nodes in the group is Δt; where, Δt=2T, and T is a time length within a one-hop range of data transmission. FIG. 13 shows a method for selecting backoff time lengths of the three nodes in a group.

In this implementation, a neighboring node around the transmission failed node of which backoff ends first will search for failed data backup information corresponding to the transmission failed node, transmit a failed data backup packet in a unicast manner, and as described above, relay the information on failed data backups to the target router node.

In this implementation, as described above, if the router node receives a failed data backup packet transmitted by a sensor node, it will broadcast the backup transmission success notification to intra-group nodes, so as to notify the intra-group nodes of a batch number of uploaded data, node data of a group of which also reach the router node, as described above.

In this implementation, the intra-group sensor node receiving the backup transmission success notification first checks whether group identification information in the packet is information from a node in the same group, proceeds with checking data source node information and a data batch sequence number information carried in the packet if the group identification information is in consistence with local group identification information, and if the sensor node has started a backoff mechanism corresponding to the data source node information and the data batch sequence number information, it will interrupt the backoff timer, and delete the backup information on failed data corresponding to the data source node.

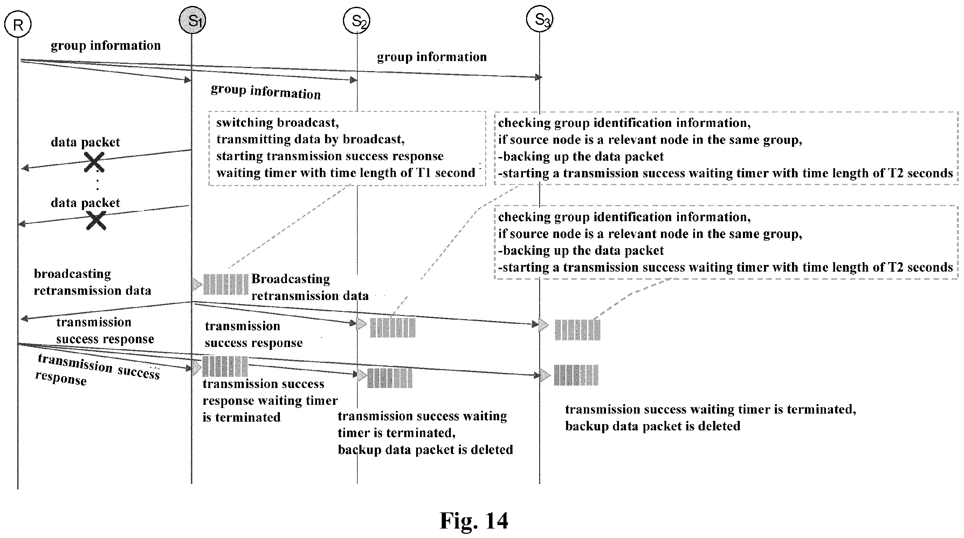

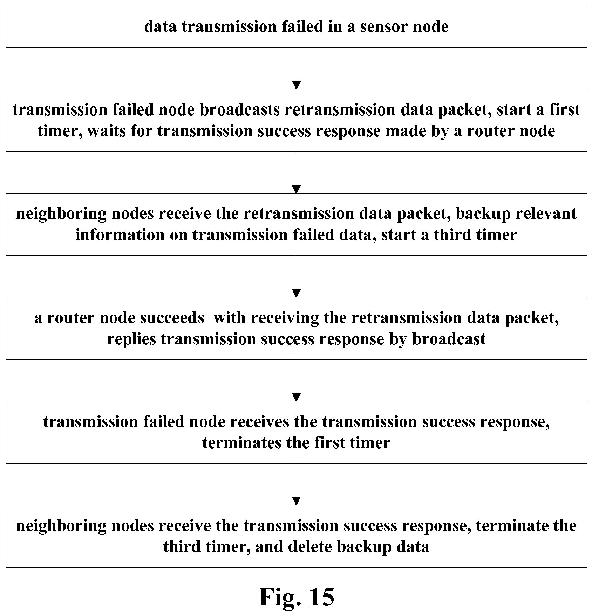

FIG. 14 is a schematic diagram of interaction of an example of a data transmission process, and FIG. 15 is a flowchart of operations corresponding to the data transmission process shown in FIG. 14; where, R is a router node, S₁, S₂, and S₃ are sensor nodes in the same relevant node group with R, S₁ being a transmission failed node, and S₂ and S₃ being intra-group neighboring nodes of S₁.

As shown in FIGs. 14 and 15, in the data transmission process, sensor node S₁ fails in data transmission, broadcasts a retransmission data packet, and starts the first timer, waiting for the transmission success response made by the router node. Furthermore, neighboring nodes S₂ and S₃ receive the retransmission data packet, back up information on transmission failed data, generate a backup data packet, and start the third timer. Moreover, the router node also receives the retransmission data packet, and replies by broadcast a transmission success response. Transmission failed node S₁ terminates its first timer after receiving the transmission success response, and neighboring nodes S₂ and S₃ terminate their third timer after receiving the transmission success response, and delete the backup data packet.

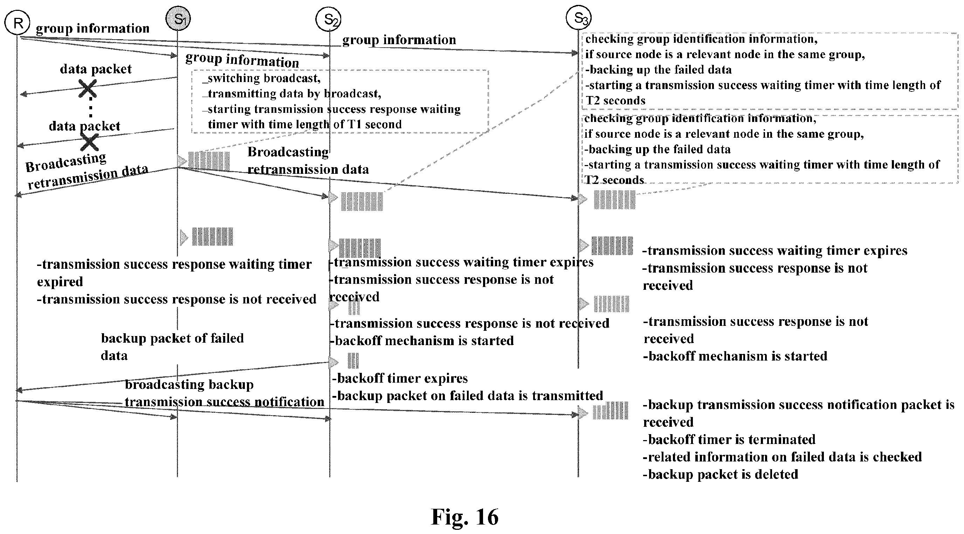

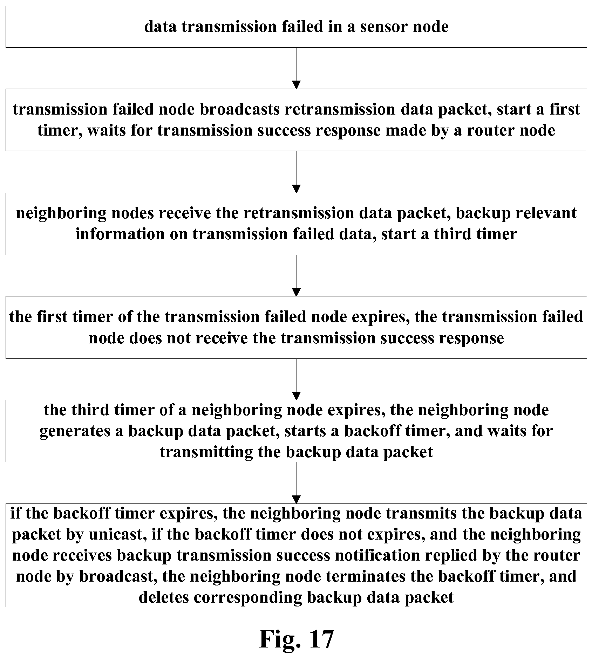

FIG. 16 is a schematic diagram of interaction of another example of the data transmission process, and FIG. 17 is a flowchart of operations corresponding to the data transmission process shown in FIG. 16; where, R is a router node, S₁, S₂, and S₃ are sensor nodes in the same relevant node group with R, S₁ being a transmission failed node, and S₂ and S₃ being intra-group neighboring nodes of S₁.

As shown in FIGs. 16 and 17, in the data transmission process, sensor node S₁ fails in data transmission, broadcasts a retransmission data packet, and starts the first timer, waiting for the transmission success response made by the router node. Furthermore, neighboring nodes S₂ and S₃ receive the retransmission data packet, back up information on transmission failed data, generate a backup data packet, and start the third timer. In this example, when the first timer expires, transmission failed node S₁ does not receive the transmission success response. When the third timer expires, the neighboring nodes start the backoff timers, waiting for transmitting backup data packets. When the backoff timer of neighboring node S₂ expires, neighboring node S₂ does not receive the backup transmission success notification, and transmits the backup data packet; and when the backoff timer of neighboring node S3 expires, neighboring node S₃ receives the backup transmission success notification, terminates the backoff timer, and deletes the backup data packet.

In this embodiment, in all the above methods, when data transmission failure occurs in a sensor node, it finally achieves successful uploading of date by retransmission by itself and information exchange with other sensor nodes in the same group, and relaying the transmission failed data by the other sensor nodes in the same group for it.

A premise of the above methods is that there always exist neighboring sensor nodes around each sensor node and are within a range covered by the same router node, and there always exist stable transmission links between these neighboring sensor nodes and the router node. Assuming that a group node set covered by a router node in a network local area is GNₛₑₜ (Group Node Set), a transmission failed node is TFN (Transmission Failed Node), a set of neighbor nodes of transmission failed node is TFNNₛₑₜ (Neighbor Set of Transmission Failed Node), a router node is R (Router), a sensor node is Sᵢ (Sensor Node), and a set of links between the sensor nodes and the router node is L={(Sᵢ, R)}. If *Sᵢ* ∈ *GNₛₑₜ*, and *Sᵢ* ∈ *TFNNₛₑₜ*, that is, *GNₛₑₜ* ∩ *TFNNₛₑₜ* ≠ ∅, and *L* ≠ ∅, by the above operations, the transmitted data may be guaranteed to be finally uploaded to the target node integrally. Here, ∅ denotes a null set.

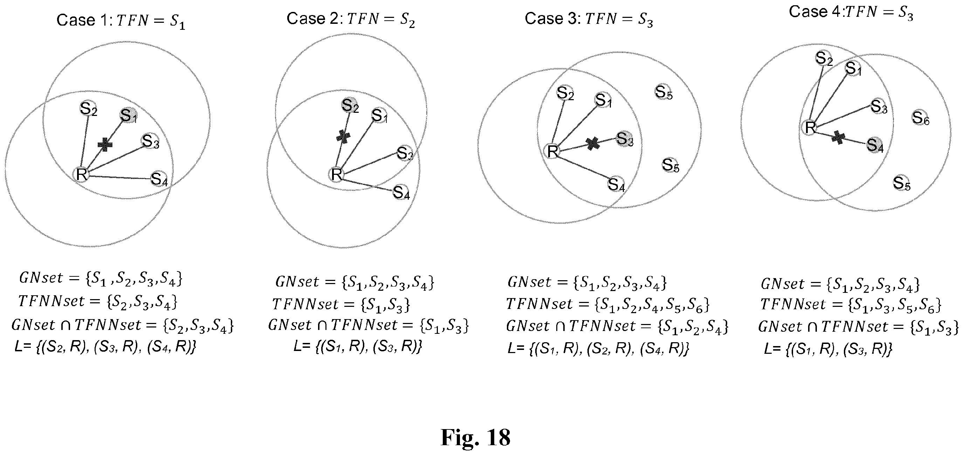

FIG. 18 shows four network morphologies when data transmission failure occurs in the sensor node. In these four cases, the transmission failed data may be transmitted to the target node by using the above methods.

In this embodiment, if the transmission failed node still fails in transmitting the transmission failed data to the target node after the interaction process between the group nodes, or there exists no stable transmission link between neighboring nodes around the transmission failed node and the router node, i.e. it is judged no in step 1104 shown in FIG. 11, the transmission failed node may be assisted by the candidate group in relaying the data for it (step 1105).

In this embodiment, the transmission failed node may modify its group identification information, and transmit the transmission failed data to an external candidate router node by transmitting an external data relay request, requesting a selected external candidate router node to relay the transmission failed data to an original target router node or upload the transmission failed data to the gateway node by other intermediate router nodes along a data transmission path of the external candidate router node.

For different network connection relationships, such as the network connection relationships shown in FIGs. 6 and 7, processing manners of the router node are different, and Embodiment 1 may be referred to for details, which shall not be described herein any further.

With the method of this embodiment, in a case where the transmission of a sensor node fails, the data collected by it may be integrally transmitted to the router node or the gateway node via the retransmission data packets, or via other sensor nodes in the group, or via nodes out of the group, thereby guaranteeing integral transmission of the data, and being simple in implementation.

### Embodiment 3

The embodiment provides a data transmission apparatus, configured in a router node in a target monitoring area. As principles of the apparatus for solving problems are similar to that of the method of Embodiment 1, Embodiment 1 may be referred to for details of the apparatus, with identical contents being not going to be described herein any further.

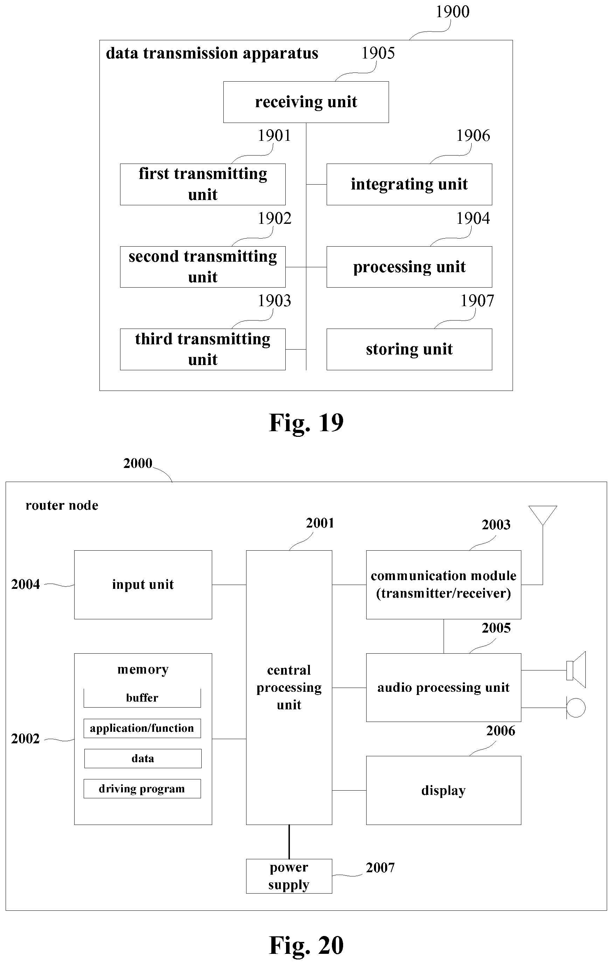

FIG. 19 is a schematic diagram of the data transmission apparatus 1900. As shown in FIG. 19, the apparatus 1900 includes:
a first transmitting unit 1901 configured to broadcast a group information packet, so that a sensor node receiving the group information packet joins in a relevant node group where the router node is located or takes a relevant node group where the router node is located as a candidate group; wherein, the group information packet includes group identification information and a group node sequence. Hence, relevant data in each target monitoring area may be guaranteed to be integrally transmitted to a target node.

In one implementation, as shown in FIG. 19, the apparatus 1900 may further include:
a second transmitting unit 1902 configured to transmit by broadcast a transmission success response when the router node receives a retransmission data packet transmitted by broadcast by a transmission failed node within the relevant node group where the router node is located. Hence, it may be guaranteed that when data transmission failure occurs in a sensor node, data collected by it may be transmitted to the target node via a retransmission data packet.

In another implementation, as shown in FIG. 19, the apparatus 1900 may further include:
a third transmitting unit 1903 configured to transmit by broadcast a backup transmission success notification when the router node receives a backup data packet transmitted by unicast by a sensor node within the relevant node group where the router node is located. Hence, it may be guaranteed that when data transmission failure occurs in a sensor node, data collected by it may be transmitted to the target node by a group neighboring node.

In a further implementation, as shown in FIG. 19, the apparatus 1900 may further include:
a processing unit 1904 configured to, when the router node receives a data relay request packet transmitted by unicast by a transmission failed node within another relevant node group, judge whether the router node is in a neighboring relationship with a router node of a relevant node group where the transmission failed node is located, relay collected data in the data relay request packet to the router node of the relevant node group where the transmission failed node is located if it is judged yes, and upload the collected data in the data relay request packet to a gateway if it is judged no. Hence, it may be guaranteed that when data transmission failure occurs in a sensor node, data collected by it may be transmitted to the target node by a node out of the group.

The above three implementations may be used separately, or may be used in a combined manner, and this embodiment is not limited thereto.

In this embodiment, as shown in FIG. 19, the apparatus 1900 may further include:
a receiving unit 1905 configured to receive a data packet transmitted by a sensor node, and start a data collection timer; and
an integrating unit 1906 configured to integrate and upload data packets belonging to a same group collected within timing of the data collection timer.

Hence, the collected relevant data in the relevant node group where the router node is located may be transmitted to the target node.

Furthermore, the receiving unit 1905 may receive the above-described retransmission data packet, backup data packet and data relay request packet, etc.

And as shown in FIG. 19, the apparatus 1900 may further include a storing unit 1907 configured to store the above-described various of information and data packets, which shall not be described herein any further.

With the apparatus of this embodiment, in a case where the transmission of a sensor node fails, the data collected by it may be integrally transmitted to the router node or the gateway node via the retransmission data packets, or via other sensor nodes in the group, or via nodes out of the group, thereby guaranteeing integral transmission of the data, and being simple in implementation.

The embodiment further provides a router node, configured with the above data transmission apparatus 1900.

FIG. 20 is a block diagram of a systematic structure of the router node of this embodiment. As shown in FIG. 20, the router node 2000 may include a central processing unit 2001 and a memory 2002, the memory 2002 being coupled to the central processing unit 2001. It should be noted that this figure is illustrative only, and other types of structures may also be used, so as to supplement or replace this structure and achieve a telecommunications function or other functions.

In one implementation, the functions of the above data transmission apparatus 1900 may be integrated into the central processing unit 2001. For example, the central processing unit 2001 may be configured to perform following control: broadcasting a group information packet, so that a sensor node receiving the group information packet joins in a relevant node group where the router node is located or takes a relevant node group where the router node is located as a candidate group; wherein, the group information packet includes group identification information and an group node sequence.

In another implementation, the data transmission apparatus 1900 and the central processing unit 2001 may be configured separately. For example, the data transmission apparatus 1900 may be configured as a chip connected to the central processing unit 2001, with its functions being realized under control of the central processing unit 2001.

As shown in FIG. 20, the router node 2000 may further include a communication module 2003, an input unit 2004, an audio processing unit 2005, a display 2006 and a power supply 2007. It should be noted that the router node 2000 does not necessarily include all the parts shown in FIG. 20, and furthermore, the router node 2000 may include parts not shown in FIG. 20, and the prior art may be referred to.

As shown in FIG. 20, the central processing unit 2001 is sometimes referred to as a controller or control, and may include a microprocessor or other processor devices and/or logic devices. The central processing unit 2001 receives input and controls operations of every components of the router node 2000.

In this embodiment, the memory 2002 may be, for example, one or more of a buffer memory, a flash memory, a hard drive, a mobile medium, a volatile memory, a nonvolatile memory, or other suitable devices, which may store the above information related to the first information, the second information, the indication information and the identification information, and may further store a program executing related information. And the central processing unit 2001 may execute the program stored in the memory 2002, so as to realize information storage or processing, etc. Functions of other parts are similar to those of the prior art, which shall not be described herein any further. The parts of the router node 2000 may be realized by specific hardware, firmware, software, or any combination thereof, without departing from the scope of the present disclosure.

With the router node of this embodiment, in a case where the transmission of a sensor nodes fails, the data collected by it may be integrally transmitted to the router node or the gateway node via the retransmission data packets, or via other sensor nodes in the group, or via nodes out of the group, thereby guaranteeing integral transmission of the data, and being simple in implementation.

### Embodiment 4

The embodiment provides a data transmission apparatus, configured in a sensor node in a target monitoring area. As principles of the apparatus for solving problems are similar to that of the method of Embodiment 2, Embodiment 2 may be referred to for details of the apparatus, with identical contents being not going to be described herein any further.

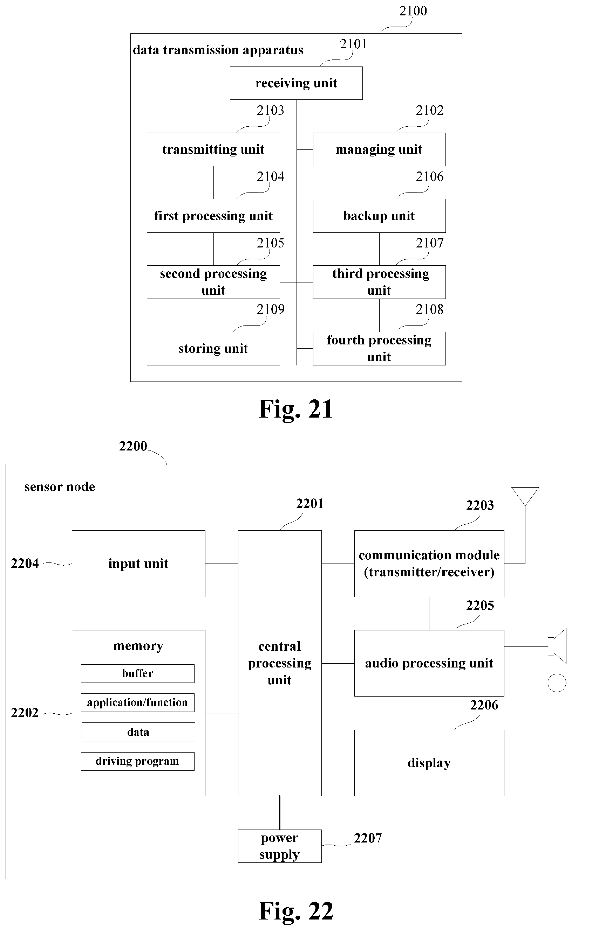

FIG. 21 is a schematic diagram of the data transmission apparatus 2100. As shown in FIG. 21, the apparatus 2100 includes:
a receiving unit 2101 configured to receive a group information packet, the group information packet including group identification information and a group node sequence; and
a managing unit 2102 configured to join in a relevant node group indicated by the group identification information or take a relevant node group indicated by the group identification information as a candidate group and save the candidate group according to the received group information packet.

Hence, relevant data of each target monitoring area may be guaranteed to be integrally transmitted to a target node.

In one implementation, the managing unit 2102 may join in the relevant node group indicated by the group identification information when the group node sequence contains the sensor node, and takes the relevant node group indicated by the group identification information as a candidate group and saves the candidate group when the group node sequence does not contain the sensor node, a received signal strength of the group information packet is greater than a predetermined threshold and the number of storage items of the candidate groups of the sensor node does not reach an upper limit.

In one implementation, as shown in FIG. 21, the apparatus 2100 may further include:
a transmitting unit 2103 configured to transmit by broadcast a retransmission data packet and start a first timer when data transmission failure occurs in the sensor node;
a first processing unit 2104 configured to judge whether the sensor node receives within timing of the first timer a transmission success response made by a router node, terminate the first timer if it is judged yes, and start a second timer if it is judged no; and
a second processing unit 2105 configured to judge whether the sensor node receives within timing of the second timer a backup transmission success notification, terminate the second timer if it is judged yes, select a candidate group from stored candidate groups if it is judged no, and transmit collected data to a router node of the selected candidate group, so as to relay the collected data via the router node of the selected candidate group.

Hence, it may be guaranteed that when data transmission failure occurs in a sensor node, data collected by it may be transmitted to the target node via a retransmission data packet or a node out of the group.

In one implementation, as shown in FIG. 21, the apparatus 2100 may further include:
a backup unit 2106 configured to, when the sensor node receives a retransmission data packet transmitted by broadcast by another sensor node within a relevant node group where the sensor node is located, back up the retransmission data packet and start a third timer;
a third processing unit 2107 configured to judge whether the sensor node receives within timing of the third timer a transmission success response made by a router node, terminate the third timer and delete a backup of the retransmission data packet if it is judged yes, and start a backoff timer if it is judged no; and
a fourth processing unit 2108 configured to judge whether the sensor node receives within timing of the backoff timer a backup transmission success notification transmitted by a router node by broadcast, terminate the backoff timer and delete the backup of the retransmission data packet if it is judged yes, and transmit the backup of the retransmission data packet to the router node if it is judged no.

Hence, it may be guaranteed that when a data transmission failure occurs in a sensor node, data collected by it may be transmitted to the target node via a group neighboring node.

Furthermore, the receiving unit 2105 may receive the above-described transmission success response, backup transmission success notification, retransmission data packet, etc.

And as shown in FIG. 21, the apparatus 2100 may further include a storing unit 2109 configured to store the above-described relevant information of the candidate group, collected data, and backup of the retransmission data packet (backup data), etc., which shall not be described herein any further.

With the apparatus of this embodiment, in a case where the transmission of a sensor node fails, the data collected by it may be integrally transmitted to the router node or the gateway node via the retransmission data packets, or via other sensor nodes in the group, or via nodes out of the group, thereby guaranteeing integral transmission of the data, and being simple in implementation.

The embodiment further provides a sensor node, configured with the above data transmission apparatus 2100.

FIG. 22 is a block diagram of a systematic structure of the sensor node of this embodiment. As shown in FIG. 22, the sensor node 2200 may include a central processing unit 2201 and a memory 2202, the memory 2202 being coupled to the central processing unit 2201. It should be noted that this figure is illustrative only, and other types of structures may also be used, so as to supplement or replace this structure and achieve a telecommunications function or other functions.

In one implementation, the functions of the above data transmission apparatus 2100 may be integrated into the central processing unit 2201. For example, the central processing unit 2201 may be configured to perform following control: receiving a group information packet, the group information packet including group identification information and a group node sequence; and joining in a relevant node group indicated by the group identification information or take a relevant node group indicated by the group identification information as a candidate group and saving the candidate group according to the received group information packet.

In another implementation, the data transmission apparatus 2100 and the central processing unit 2201 may be configured separately. For example, the data transmission apparatus 2100 may be configured as a chip connected to the central processing unit 2201, with its functions being realized under control of the central processing unit 2201.

As shown in FIG. 22, the sensor node 2200 may further include a communication module 2203, an input unit 2204, an audio processing unit 2205, a display 2206 and a power supply 2207. It should be noted that the sensor node 2200 does not necessarily include all the parts shown in FIG. 22, and furthermore, the sensor node 2200 may include parts not shown in FIG. 22, and the prior art may be referred to.

As shown in FIG. 22, the central processing unit 2201 is sometimes referred to as a controller or control, and may include a microprocessor or other processor devices and/or logic devices. The central processing unit 2201 receives input and controls operations of every components of the sensor node 2200.
in this embodiment, the memory 2202 may be, for example, one or more of a buffer memory, a flash memory, a hard drive, a mobile medium, a volatile memory, a nonvolatile memory, or other suitable devices, which may store the above information related to the first information, the second information, the indication information and the identification information, and may further store a program executing related information. And the central processing unit 2201 may execute the program stored in the memory 2202, so as to realize information storage or processing, etc. Functions of other parts are similar to those of the prior art, which shall not be described herein any further. The parts of the sensor node 2200 may be realized by specific hardware, firmware, software, or any combination thereof, without departing from the scope of the present disclosure.

With the sensor node of this embodiment, in a case where the transmission of a sensor node fails, the data collected by it may be integrally transmitted to the sensor node or the gateway node via the retransmission data packets, or via other sensor nodes in the group, or via nodes out of the group, thereby guaranteeing integral transmission of the data, and being simple in implementation.

An embodiment of the present disclosure provides a computer readable program code, which, when executed in a data transmission apparatus or a router node, will cause a computer unit to carry out the method described in Embodiment 1 in the data transmission apparatus or the router node.

An embodiment of the present disclosure provides a computer readable medium, including a computer readable program code, which will cause a computer unit to carry out the method described in Embodiment 1 in a data transmission apparatus or a router node.

An embodiment of the present disclosure provides a computer readable program code, which, when executed in a data transmission apparatus or a sensor node, will cause a computer unit to carry out the method described in Embodiment 2 in the data transmission apparatus or the sensor node.

An embodiment of the present disclosure provides a computer readable medium, including a computer readable program code, which will cause a computer unit to carry out the method described in Embodiment 2 in a data transmission apparatus or a sensor node.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only. Various variants and modifications may be made by those skilled in the within the scope of the claims.

## Claims

1. A data transmission apparatus (1900), configured in a router node in a target monitoring area, the apparatus comprising:
a first transmitting unit (1901) configured to broadcast a group information packet, wherein the group information packet is used to notify a sensor node receiving the group information packet to join in a relevant node group where the router node is located or take a relevant node group where the router node is located as a candidate group;
wherein, the group information packet comprises group identification information and a group node sequence, wherein the group node sequence contains identifications of sensor nodes contained in the relevant node group where the router node is located;
wherein the apparatus further comprises:
a processing unit (1904) configured to, when the router node receives a data relay request packet transmitted by unicast by a transmission failed node within another relevant node group, judge whether the router node is in a neighboring relationship with a router node of a relevant node group where the transmission failed node is located, relay collected data in the data relay request packet to the router node of the relevant node group where the transmission failed node is located if it is judged yes, and upload the collected data in the data relay request packet to a gateway if it is judged no,
preferably wherein,
the data relay request packet comprises:
group identification information indicating a relevant node group where the router node is located;
data source node information indicating a transmission failed node transmitting the above data relay request packet;
original group identification information indicating the relevant node group where the transmission failed node transmitting the data relay request packet is located;
collected data indicating the data collected by the transmission failed node;
a data batch sequence number indicating a sequence of a data group to which the above collected data pertain; and
transmission failure identification indicating that the collected data are transmission failed data.

2. The apparatus (1900) according to claim 1, wherein the group identification information is identification of the relevant node group where the router node is located.

3. The apparatus (1900) according to claim 1 or 2, wherein the apparatus further comprises:
a second transmitting unit (1902) configured to transmit by broadcast a transmission success response when the router node receives a retransmission data packet transmitted by broadcast by a transmission failed node within the relevant node group where the router node is located,
preferably wherein,
the retransmission data packet comprises:
data source node information indicating a source node transmitting the retransmission data packet, i.e. the transmission failed node;
group identification information indicating a relevant node group where the source node is located;
collected data indicating the data collected by the transmission failed node;
a data batch sequence number indicating a sequence of the collected data in a data group; and
transmission failure identification indicating that the collected data are transmission failed data;
and the transmission success response comprises:
group identification information indicating a relevant node group where the router node is located;
data source node information indicating a source node of the retransmission data packet replied by the transmission success response, i.e. the transmission failed node; and
a data batch sequence number indicating a sequence of a data group to which the collected data in the retransmission data packet received by the router node pertain.

4. The apparatus (1900) according to any preceding claim, wherein the apparatus further comprises:
a third transmitting unit (1903) configured to transmit by broadcast a backup transmission success notification when the router node receives a backup data packet transmitted by unicast by a sensor node within the relevant node group where the router node is located,
preferably wherein,
the backup data packet comprises:
local node information indicating a source node transmitting the backup data packet, i.e. the sensor node;
data source node information indicating a source node of the backup data, i.e. the transmission failed node;
group identification information indicating a relevant node group where the sensor node is located;
collected data indicating data backed up by the sensor node and collected by the transmission failed node;
a data batch sequence number indicates a sequence of a data group to which the above collected data pertain; and
transmission failure identification indicating that the above collected data are transmission failed data;
and the backup transmission success notification comprises:
group identification information indicating a relevant node group where the router node is located;
data source node information indicating a source node transmitting the backup transmission success notification, i.e. the router node; and
a data batch sequence number indicating a sequence of a data group to which the above collected data in the backup data packet received by the router node pertain.

5. The apparatus (1900) according to any preceding claim, wherein the apparatus further comprises:
a receiving unit (1905) configured to receive a data packet transmitted by a sensor node, and start a data collection timer; and
an integrating unit (1906) configured to integrate and upload data packets belonging to a same group collected within timing of the data collection timer.

6. A data transmission apparatus (2100), configured in a sensor node in a target monitoring area, the apparatus comprising:
a receiving unit (2101) configured to receive a group information packet, the group information packet comprising group identification information and a group node sequence; and
a managing unit (2102) configured to join in a relevant node group indicated by the group identification information or take a relevant node group indicated by the group identification information as a candidate group and save the candidate group according to the received group information packet,
wherein the group node sequence contains identifications of sensor nodes contained in the relevant node group,
wherein the managing unit joins in the relevant node group indicated by the group identification information when the group node sequence contains the sensor node, and takes the relevant node group indicated by the group identification information as a candidate group and saves the candidate group when the group node sequence does not contain the sensor node, a received signal strength of the group information packet is greater than a predetermined threshold and the number of storage items of the candidate groups of the sensor node does not reach an upper limit.

7. The apparatus (2100) according to claim 6, wherein the apparatus further comprises:
a transmitting unit (2103) configured to transmit by broadcast a retransmission data packet and start a first timer when data transmission failure occurs in the sensor node;
a first processing unit (2104) configured to judge whether the sensor node receives within timing of the first timer a transmission success response made by a router node, terminate the first timer if it is judged yes, and start a second timer if it is judged no; and
a second processing unit (2105) configured to judge whether the sensor node receives within timing of the second timer a backup transmission success notification, terminate the second timer if it is judged yes, select a candidate group from stored candidate groups if it is judged no, and transmit collected data to a router node of the selected candidate group, so as to relay the collected data via the router node of the selected candidate group,
preferably wherein a time length of the first timer is a time length needed in transmitting data in a two-hop range.

8. The apparatus (2100) according to claim 6 or 7, wherein the apparatus further comprises:
a backup unit (2106) configured to, when the sensor node receives a retransmission data packet transmitted by broadcast by another sensor node within a relevant node group where the sensor node is located, back up the retransmission data packet and start a third timer;
a third processing unit (2107) configured to judge whether the sensor node receives within timing of the third timer a transmission success response made by a router node, terminate the third timer and delete a backup of the retransmission data packet if it is judged yes, and start a backoff timer if it is judged no; and
a fourth processing unit (2108) configured to judge whether the sensor node receives within timing of the backoff timer a backup transmission success notification transmitted by a router node by broadcast, terminate the backoff timer and delete the backup of the retransmission data packet if it is judged yes, and transmit the backup of the retransmission data packet to the router node if it is judged no,
preferably wherein either:
a time length of the third timer is a time length needed in transmitting data in a one-hop range; or
time lengths of backoff timers of the sensor nodes are random, and an interval between selection intervals of the time lengths of the backoff timers of the sensor nodes is a time length needed in transmitting data in a two-hop range.

9. A data transmission method, applicable to a sensor node in a target monitoring area, the method comprising:
receiving a group information packet, the group information packet comprising group identification information and a group node sequence; and
joining in a relevant node group indicated by the group identification information or taking a relevant node group indicated by the group identification information as a candidate group and saving the candidate group according to the received group information packet,
wherein the group node sequence contains identifications of sensor nodes contained in the relevant node group,
wherein the sensor node joins in the relevant node group indicated by the group identification information when the group node sequence contains the sensor node;
and the sensor node takes the relevant node group indicated by the group identification information as a candidate group and saves the candidate group when the group node sequence does not contain the sensor node, a received signal strength of the group information packet is greater than a predetermined threshold and the number of storage items of the candidate groups of the sensor node does not reach an upper limit.

10. The method according to claim 9, wherein the method further comprises:
transmitting by broadcast a retransmission data packet and starting a first timer when data transmission failure occurs in the sensor node;
terminating the first timer if the sensor node receives within timing of the first timer a transmission success response made by a router node;
starting a second timer if the sensor node does not receive within timing of the first timer a transmission success response made by a router node; and
selecting a candidate group from stored candidate groups if the sensor node does not receive within timing of the second timer a backup transmission success notification, and transmitting collected data to a router node of the selected candidate group, so as to relay the collected data via the router node of the selected candidate group.

11. The method according to claim 9 or 10, wherein,
when the sensor node receives a retransmission data packet transmitted by broadcast by another sensor node within a relevant node group where the sensor node is located, the sensor node backs up the retransmission data packet and starts a third timer;
if the sensor node receives within timing of the third timer a transmission success response made by a router node, the sensor node terminates the third timer and deletes a backup of the retransmission data packet;
if the sensor node does not receive within timing of the third timer a transmission success response made by a router node, the sensor node starts a backoff timer;
if the sensor node receives within timing of the backoff timer a backup transmission success notification transmitted by a router node by broadcast, the sensor node terminates the backoff timer and deletes the backup of the retransmission data packet;
and if the sensor node does not receive within timing of the backoff timer a backup transmission success notification transmitted by a router node by broadcast, the sensor node transmits the backup of the retransmission data packet to the router node.

## Patentansprüche

1. Datenübertragungsvorrichtung (1900), die in einem Routerknoten in einem
Zielüberwachungsbereich konfiguriert ist, wobei die Vorrichtung umfasst:
eine erste Übertragungseinheit (1901), die konfiguriert ist, ein Gruppeninformationspaket rundzusenden, wobei das Gruppeninformationspaket verwendet wird, einen Sensorknoten zu benachrichtigen, der das Gruppeninformationspaket empfängt, um sich einer relevanten Knotengruppe anzuschließen, in der sich der Routerknoten befindet, oder eine relevante Knotengruppe, in der sich der Routerknoten befindet, als Kandidatengruppe zu nehmen;
wobei das Gruppeninformationspaket Gruppenkennungsinformationen und eine Gruppenknotensequenz umfasst, wobei die Gruppenknotensequenz Kennungen von Sensorknoten enthält, die in der relevanten Knotengruppe, in der sich der Routerknoten befindet, enthalten sind;
wobei die Vorrichtung ferner umfasst:
eine Verarbeitungseinheit (1904), die konfiguriert ist, wenn der Routerknoten ein Datenweiterleitungsanforderungspaket empfängt, das durch Unicast von einen Übertragungsfehlerknoten innerhalb einer anderen relevanten Knotengruppe übertragen wird, zu beurteilen, ob der Routerknoten in einer Nachbarbeziehung zu einem Routerknoten einer relevanten Knotengruppe steht, in der sich der Übertragungsfehlerknoten befindet, gesammelte Daten in dem Datenweiterleitungsanforderungspaket an den Routerknoten der relevanten Knotengruppe, in der sich der Übertragungsfehlerknoten befindet, weitezuleiten, falls mit Ja beurteilt wird, und die gesammelten Daten in dem Datenweiterleitungsanforderungspaket zu einem Gateway hochzuladen, falls mit Nein beurteilt wird,
wobei vorzugsweise,
das Datenweiterleitungsanforderungspaket umfasst:
Gruppenkennungsinformationen, die eine relevante Knotengruppe angeben, in der sich der Routerknoten befindet;
Datenquellenknoteninformationen, die einen Übertragungsfehlerknoten angeben, der das obige Datenweiterleitungsanforderungspaket überträgt;
Ursprungsgruppenkennungsinformationen, die die relevante Knotengruppe angeben, in der sich der Übertragungsfehlerknoten, der das Datenweiterleitungsanforderungspaket überträgt, befindet;
gesammelte Daten, die die durch den Übertragungsfehlerknoten gesammelten Daten angeben;
eine Datenstapelsequenznummer, die eine Sequenz einer Datengruppe angibt, zu der die oben gesammelten Daten gehören; und
eine Übertragungsfehlerkennung, der angibt, dass die gesammelten Daten Übertragungsfehlerdaten sind.

2. Vorrichtung (1900) nach Anspruch 1, wobei die Gruppenkennungsinformationen die Kennung der relevanten Knotengruppe sind, in der sich der Routerknoten befindet.

3. Vorrichtung (1900) nach Anspruch 1 oder 2, wobei die Vorrichtung ferner umfasst:
eine zweite Übertragungseinheit (1902), die konfiguriert ist, durch Rundsenden eine Übertragungserfolgsantwort zu senden, wenn der Routerknoten ein Neuübertragungsdatenpaket empfängt, das durch Rundsenden von einem Übertragungsfehlerknoten innerhalb der relevanten Knotengruppe, in der sich der Routerknoten befindet, übertragen wird,
wobei bevorzugt,
das Neuübertragungsdatenpaket umfasst:
Datenquellenknoteninformationen, die einen Quellenknoten angeben, der das Neuübertragungsdatenpaket überträgt, d. h. den Übertragungsfehlerknoten;
Gruppenkennungsinformationen, die eine relevante Knotengruppe angeben, in der sich der Quellenknoten befindet;
gesammelte Daten, die die durch den Übertragungsfehlerknoten gesammelte Daten angeben;
eine Datenstapelsequenznummer, die eine Sequenz der gesammelten Daten in einer Datengruppe angibt; und
eine Übertragungsfehlerkennung, die angibt, dass die gesammelten Daten Übertragungsfehlerdaten sind;
und die Übertragungserfolgsantwort umfasst:
Gruppenkennungsinformationen, die eine relevante Knotengruppe angeben, in der sich der Routerknoten befindet;
Datenquellenknoteninformationen, die einen Quellenknoten des Neuübertragungsdatenpakets angeben, auf das die Übertragungserfolgsantwort geantwortet hat, d. h. den Übertragungsfehlerknoten; und
eine Datenstapelsequenznummer, die eine Sequenz einer Datengruppe angibt, zu der die gesammelten Daten in dem von dem Routerknoten empfangenen Neuübertragungsdatenpaket gehören.

4. Vorrichtung (1900) nach einem der vorhergehenden Ansprüche, wobei die Vorrichtung ferner umfasst:
eine dritte Übertragungseinheit (1903), die konfiguriert ist, eine Sicherungsübertragungs-Erfolgsbenachrichtigung durch Rundsenden zu senden, wenn der Routerknoten ein Sicherungsdatenpaket empfängt, das durch Unicast von einem Sensorknoten innerhalb der relevanten Knotengruppe, in der sich der Routerknoten befindet, übertragen wird,
wobei bevorzugt,
das Sicherungsdatenpaket umfasst:
lokale Knoteninformationen, die einen Quellenknoten angeben, der das Sicherungsdatenpaket überträgt, d. h. den Sensorknoten;
Datenquellenknoteninformationen, die einen Quellenknoten der Sicherungsdaten angeben, d. h. den Übertragungsfehlerknoten;
Gruppenkennungsinformationen, die eine relevante Knotengruppe angeben, in der sich der Sensorknoten befindet;
gesammelte Daten, die von dem Sensorknoten gesicherte und von dem Übertragungsfehlerknoten gesammelte Daten angeben;
eine Datenstapelsequenznummer, die eine Sequenz einer Datengruppe angibt, zu der die oben gesammelten Daten gehören; und
eine Übertragungsfehlerkennung, die angibt, dass die oben gesammelten Daten Übertragungsfehlerdaten sind;
und die Sicherungsübertragungs-Erfolgsbenachrichtigung umfasst:
Gruppenkennungsinformationen, die eine relevante Knotengruppe angeben, in der sich der Routerknoten befindet;
Datenquellenknoteninformationen, die einen Quellenknoten angeben, der die Sicherungsübertragungs-Erfolgsbenachrichtigung überträgt, d. h. den Routerknoten; und
eine Datenstapelsequenznummer, die eine Sequenz einer Datengruppe angibt, zu der die oben gesammelten Daten in dem von dem Routerknoten empfangenen Sicherungsdatenpaket gehören.

5. Vorrichtung (1900) nach einem der vorhergehenden Ansprüche, wobei die Vorrichtung ferner umfasst:
eine Empfangseinheit (1905), die konfiguriert ist, ein von einem Sensorknoten übertragenes Datenpaket zu empfangen und einen Datensammelzeitgeber zu starten; und
eine Integrationseinheit (1906), die konfiguriert ist, zu derselben Gruppe gehörige Datenpakete, die innerhalb der Zeit des Datensammelzeitgebers gesammelt wurden, zu integrieren und hochzuladen.

6. Datenübertragungsvorrichtung (2100), die in einem Sensorknoten in einem Zielüberwachungsbereich konfiguriert ist, wobei die Vorrichtung umfasst:
eine Empfangseinheit (2101), die konfiguriert ist, ein Gruppeninformationspaket zu empfangen, wobei das Gruppeninformationspaket Gruppenkennungsinformationen und eine Gruppenknotensequenz umfasst; und
eine Verwaltungseinheit (2102), die konfiguriert ist, sich einer relevanten Knotengruppe anzuschließen, die durch die Gruppenkennungsinformationen angegeben ist, oder eine relevante Knotengruppe, die durch die Gruppenkennungsinformationen angegeben ist, als eine Kandidatengruppe zu nehmen, und die Kandidatengruppe gemäß dem empfangenen Gruppeninformationspaket zu speichern,
wobei die Gruppenknotensequenz Kennungen von Sensorknoten enthält, die in der relevanten Knotengruppe enthalten sind,
wobei die Verwaltungseinheit sich der relevanten Knotengruppe anschließt, die durch die Gruppenkennungsinformationen angegeben ist, wenn die Gruppenknotensequenz den Sensorknoten enthält, und die relevante Knotengruppe, die durch die Gruppenkennungsinformationen angegeben ist, als Kandidatengruppe nimmt, und die Kandidatengruppe speichert, wenn die Gruppeknotensequenz keinen Sensorknoten enthält, wobei eine empfangene Signalstärke des Gruppeninformationspakets größer als ein vorbestimmter Schwellenwert ist und die Anzahl der Speicherelemente der Kandidatengruppen des Sensorknotens keine obere Grenze erreicht.

7. Vorrichtung (2100) nach Anspruch 6, wobei die Vorrichtung ferner umfasst:
eine Übertragungseinheit (2103), die konfiguriert ist, ein Neuübertragungsdatenpaket durch Rundsenden zu übertragen, und einen ersten Zeitgeber zu starten, wenn ein Datenübertragungsfehler in dem Sensorknoten auftritt;
eine erste Verarbeitungseinheit (2104), die konfiguriert ist, zu beurteilen, ob der Sensorknoten innerhalb der Zeit des ersten Zeitgebers eine von einem Routerknoten gegebene Übertragungserfolgsantwort empfängt, den ersten Zeitgeber zu beenden, falls mit Ja beurteilt wird, und einen zweiten Zeitgeber zu starten, falls mit Nein beurteilt wird; und
eine zweite Verarbeitungseinheit (2105), die konfiguriert ist, zu beurteilen, ob der Sensorknoten innerhalb des Zeitpunkts des zweiten Zeitgebers eine Sicherungsübertragungs-Erfolgsbenachrichtigung empfängt, den zweiten Zeitgeber zu beenden, falls mit Ja beurteilt wird, eine Kandidatengruppe aus gespeicherten Kandidatengruppen auszuwählen, falls mit Nein beurteilt wird, und gesammelte Daten an einen Routerknoten der ausgewählten Kandidatengruppe zu übertragen, um die gesammelten Daten über den Routerknoten der ausgewählten Kandidatengruppe weiterzuleiten,
wobei vorzugsweise eine Zeitlänge des ersten Zeitgebers eine Zeitlänge ist, die zum Übertragen von Daten in einer Zwei-Sprung-Reichweite benötigt wird.

8. Vorrichtung (2100) nach Anspruch 6 oder 7, wobei die Vorrichtung ferner umfasst:
eine Sicherungseinheit (2106), die konfiguriert ist, wenn der Sensorknoten ein Neuübertragungsdatenpaket empfängt, das durch Rundsenden von einem anderen Sensorknoten innerhalb einer relevanten Knotengruppe, in der sich der Sensorknoten befindet, übertragen wird, das Neuübertragungsdatenpaket zu sichern, und einen dritten Zeitgeber zu starten;
eine dritte Verarbeitungseinheit (2107), die konfiguriert ist, zu beurteilen, ob der Sensorknoten innerhalb einer Zeit des dritten Zeitgebers eine von einem Routerknoten gegebene Übertragungserfolgsantwort empfängt, den dritten Zeitgeber zu beenden, und eine Sicherung des Neuübertragungsdatenpakets zu löschen, falls mit Ja beurteilt wird, und einen Backoff-Zeitgeber zu starten, falls mit Nein beurteilt wird; und
eine vierte Verarbeitungseinheit (2108), die konfiguriert ist, zu beurteilen, ob der Sensorknoten innerhalb einer Zeit des Backoff-Zeitgebers eine von einem Routerknoten durch Rundsenden übertragene Sicherungsübertragungs-Erfolgsbenachrichtigung empfängt, den Backoff-Timer zu beenden, und die Sicherung des Neuübertragungsdatenpakets zu löschen, falls mit Ja beurteilt wird, und die Sicherung des Neuübertragungsdatenpakets an den Routerknoten zu übertragen, falls mit Nein beurteilt wird,
wobei bevorzugt entweder:
eine Zeitlänge des dritten Zeitgebers eine Zeitlänge ist, die zum Übertragen von Daten in einer EinSprung-Reichweite benötigt wird; oder
Zeitlängen von Backoff-Zeitgebern der Sensorknoten zufällig sind, und ein Intervall zwischen Auswahlintervallen der Zeitlängen der Backoff-Zeitgeber der Sensorknoten eine Zeitlänge ist, die zum Übertragen von Daten in einer Zwei-Sprung-Reichweite benötigt wird.

9. Datenübertragungsverfahren, das auf einen Sensorknoten in einem Zielüberwachungsbereich anwendbar ist, wobei das Verfahren umfasst:
Empfangen eines Gruppeninformationspakets, wobei das Gruppeninformationspaket Gruppenkennungsinformationen und eine Gruppenknotensequenz umfasst; und
Anschließen an eine relevanten Knotengruppe, die durch die Gruppenkennungsinformationen angegeben ist, oder Nehmen einer relevanten Knotengruppe, die durch die Gruppenkennungsinformationen angegeben ist, als eine Kandidatengruppe, und Speichern der Kandidatengruppe gemäß dem empfangenen Gruppeninformationspaket,
wobei die Gruppenknotensequenz Kennungen von Sensorknoten enthält, die in der relevanten Knotengruppe enthalten sind,
wobei sich der Sensorknoten der relevanten Knotengruppe anschließt, die durch die Gruppenkennungsinformationen angegeben ist, wenn die Gruppenknotensequenz den Sensorknoten enthält;
und der Sensorknoten die relevante Knotengruppe, die durch die Gruppenkennungsinformationen angegeben ist, als Kandidatengruppe nimmt, und die Kandidatengruppe speichert, wenn die Gruppenknotensequenz den Sensorknoten nicht enthält, eine empfangene Signalstärke des Gruppeninformationspakets größer als ein vorbestimmter Schwellenwert ist, und die Anzahl der Speicherelemente der Kandidatengruppen des Sensorknotens keine obere Grenze erreicht.

10. Verfahren nach Anspruch 9, wobei das Verfahren ferner umfasst:
Übertragen, durch Rundsenden, eines Neuübertragungsdatenpakets, und Starten eines ersten Zeitgebers, wenn ein Datenübertragungsfehler in dem Sensorknoten auftritt;
Beenden des ersten Zeitgebers, falls der Sensorknoten innerhalb des Zeitgebers des ersten Zeitgebers eine von einem Routerknoten übertragene Übertragungserfolgsantwort empfängt;
Starten eines zweiten Zeitgebers, falls der Sensorknoten nicht innerhalb einer Zeit des ersten Zeitgebers eine von einem Routerknoten übertragene Übertragungserfolgsantwort empfängt; und
Auswählen einer Kandidatengruppe aus gespeicherten Kandidatengruppen, falls der Sensorknoten nicht innerhalb einer Zeit des zweiten Zeitgebers eine Sicherungsübermittlungs-Erfolgsbenachrichtigung empfängt, und Übertragen von gesammelten Daten an einen Routerknoten der ausgewählten Kandidatengruppe, um die gesammelten Daten über den Routerknoten der ausgewählten Kandidatengruppe weiterzuleiten.

11. Verfahren nach Anspruch 9 oder 10, wobei
wenn der Sensorknoten ein Neuübertragungsdatenpaket empfängt, das durch Rundsenden von einem anderen Sensorknoten innerhalb einer relevanten Knotengruppe, in der sich der Sensorknoten befindet, übertragen wird, der Sensorknoten das Neuübertragungsdatenpaket sichert, und einen dritten Zeitgeber startet;
falls der Sensorknoten innerhalb der Zeit des dritten Zeitgebers eine von einem Routerknoten gegebene Übertragungserfolgsantwort empfängt, der Sensorknoten den dritten Zeitgeber beendet, und eine Sicherung des Neuübertragungsdatenpakets löscht;
falls der Sensorknoten nicht innerhalb des Zeitpunkts des dritten Zeitgebers eine von einem Routerknoten übertragene Übertragungserfolgsantwort empfängt, der Sensorknoten einen Backoff-Zeitgeber startet;
falls der Sensorknoten innerhalb einer Zeit des Backoff-Zeitgebers eine von einem Routerknoten übertragene Sicherungsübertragungs-Erfolgsbenachrichtigung durch Rundsenden empfängt, der Sensorknoten den Backoff-Zeitgeber beendet, und die Sicherung des Neuübertragungsdatenpakets löscht,
und, falls der Sensorknoten nicht innerhalb einer Zeit des Backoff-Zeitgebers eine von einem Routerknoten durch Rundsenden übertragene Sicherungsübertragungs-Erfolgsbenachrichtigung empfängt, der Sensorknoten die Sicherung des Neuübertragungsdatenpakets an den Routerknoten überträgt.

## Revendications

1. Appareil de transmission de données (1900), configuré dans un noeud de routeur dans une zone de surveillance cible, l'appareil comprenant :
une première unité de transmission (1901) configurée pour diffuser un paquet d'informations de groupe, dans lequel le paquet d'informations de groupe est utilisé pour indiquer à un noeud de capteur qui reçoit le paquet d'informations de groupe de rejoindre un groupe de noeuds dans lequel le noeud de routeur se trouve, ou pour considérer un groupe de noeuds dans lequel le noeud de routeur se trouve comme un groupe candidat ;
dans lequel le paquet d'informations de groupe comprend des informations d'identification de groupe et une séquence de noeuds de groupe, dans lequel la séquence de noeuds de groupe contient les identifications des noeuds de capteurs contenus dans le groupe de noeuds dans lequel le noeud de routeur se trouve ;
dans lequel l'appareil comprend en outre :
une unité de traitement (1904) configurée pour, lorsque le noeud de routeur reçoit un paquet de demande de relais de données transmis par monodiffusion par un noeud à échec de transmission d'un autre groupe de noeuds, estimer si le noeud de routeur se trouve dans une relation de voisinage avec un noeud de routeur d'un groupe de noeuds dans lequel se trouve le noeud à échec de transmission, relayer les données collectées dans le paquet de demande de relais de données vers le noeud de routeur du groupe de noeuds dans lequel se trouve le noeud à échec de transmission s'il est estimé que « Oui », et télécharger les données collectées dans le paquet de demande de relais de données vers une passerelle s'il est estimé que « Non »,
dans lequel, de préférence,
le paquet de demande de relais de données comprend :
des informations d'identification de groupe qui indiquent un groupe de noeuds dans lequel se trouve le noeud de routeur ;
des informations de noeud de source de données qui indiquent un noeud à échec de transmission qui transmet le paquet de demande de relais de données ci-dessus ;
des informations d'identification de groupe d'origine qui indiquent le groupe de noeuds dans lequel se trouve le noeud à échec de transmission qui transmet le paquet de demande de relais de données ;
des données collectées qui indiquent les données collectées par le noeud à échec de transmission ;
un numéro de séquence de lot de données qui indique une séquence d'un groupe de données auquel appartiennent les données collectées ci-dessus ; et
une identification d'échec de transmission qui indique que les données collectées sont des données à échec de transmission.

2. Appareil (1900) selon la revendication 1, dans lequel les informations d'identification de groupe sont une identification du groupe de noeuds dans lequel le trouve le noeud de routeur.

3. Appareil (1900) selon la revendication 1 ou 2, dans lequel l'appareil comprend en outre :
une seconde unité de transmission (1902) configurée pour transmettre par diffusion une réponse de réussite de transmission lorsque le noeud de routeur reçoit un paquet de données de retransmission transmis par diffusion par un noeud à échec de transmission du groupe de noeuds dans lequel se trouve le noeud de routeur,
dans lequel, de préférence,
le paquet de données de retransmission comprend :
des informations de noeud de source de données qui indiquent un noeud de source qui transmet le paquet de données de retransmission, c'est-à-dire le noeud à échec de transmission ;
des informations d'identification de groupe qui indiquent un groupe de noeuds dans lequel se trouve le noeud de source ;
des données collectées qui indiquent les données collectées par le noeud à échec de transmission ;
un numéro de séquence de lot de données qui indique une séquence des données collectées dans un groupe de données ; et
une identification d'échec de transmission qui indique que les données collectées sont des données à échec de transmission ;
et la réponse de réussite de transmission comprend :
des informations d'identification de groupe qui indiquent un groupe de noeuds dans lequel se trouve le noeud de routeur ;
des informations de noeud de source de données qui indiquent un noeud de source du paquet de données de retransmission qui a fait l'objet de la réponse de réussite de transmission, c'est-à-dire le noeud à échec de transmission ;
et
un numéro de séquence de lot de données qui indique une séquence d'un groupe de données auquel appartiennent les données collectées dans le paquet de données de retransmission reçu par le noeud de routeur.

4. Appareil (1900) selon l'une quelconque des revendications précédentes, dans lequel l'appareil comprend en outre :
une troisième unité de transmission (1903) configurée pour transmettre par diffusion une notification de réussite de transmission de sauvegarde lorsque le noeud de routeur reçoit un paquet de données de sauvegarde transmis par monodiffusion par un noeud de capteur du groupe de noeuds dans lequel se trouve le noeud de routeur,
dans lequel, de préférence,
le paquet de données de sauvegarde comprend :
des informations de noeud local qui indiquent un noeud de source qui transmet le paquet de données de sauvegarde, c'est-à-dire le noeud de capteur ;
des informations de noeud de source de données qui indiquent un noeud de source des données de sauvegarde, c'est-à-dire le noeud à échec de transmission ;
des informations d'identification de groupe qui indiquent un groupe de noeuds dans lequel se trouve le noeud de capteur ;
des données collectées qui indiquent les données sauvegardées par le noeud de capteur et collectées par le noeud à échec de transmission ;
un numéro de séquence de lot de données qui indique une séquence d'un groupe de données auquel appartiennent les données collectées ci-dessus ; et
une identification d'échec de transmission qui indique que les données collectées ci-dessus sont des données à échec de transmission ;
et la notification de réussite de transmission de sauvegarde comprend :
des informations d'identification de groupe qui indiquent un groupe de noeuds dans lequel se trouve le noeud de routeur ;
des informations de noeud de source de données qui indiquent un noeud de source qui transmet la notification de réussite de transmission de sauvegarde, c'est-à-dire le noeud de routeur ; et
un numéro de séquence de lot de données qui indique une séquence d'un groupe de données auquel appartiennent les données collectées ci-dessus dans le paquet de données de sauvegarde reçu par le noeud de routeur.

5. Appareil (1900) selon l'une quelconque des revendications précédentes, dans lequel l'appareil comprend en outre :
une unité de réception (1905) configurée pour recevoir un paquet de données transmis par un noeud de capteur, et pour déclencher un minuteur de collecte de données ; et
une unité d'intégration (1906) configurée pour intégrer et télécharger des paquets de données qui appartiennent à un même groupe et collectés pendant le fonctionnement du minuteur de collecte de données.

6. Appareil de transmission de données (2100), configuré dans un noeud de capteur dans une zone de surveillance cible, l'appareil comprenant :
une unité de réception (2101) configurée pour recevoir un paquet d'informations de groupe, le paquet d'informations de groupe comprenant des informations d'identification de groupe et une séquence de noeuds de groupe ; et
une unité de gestion (2102) configurée pour rejoindre un groupe de noeuds indiqué par les informations d'identification de groupe ou pour prendre un groupe de noeuds indiqué par les informations d'identification de groupe comme un groupe candidat, et sauvegarder le groupe candidat selon le paquet d'informations de groupe reçu,
dans lequel la séquence de noeud de groupe contient les identifiants de noeuds de capteurs contenues dans le groupe de noeuds,
dans lequel l'unité de gestion rejoint le groupe de noeuds indiqué par les informations d'identification de groupe lorsque la séquence de noeud de groupe contient le noeud de capteur, et prend le groupe de noeuds indiqué par les informations d'identification de groupe comme un groupe candidat, et sauvegarde le groupe candidat lorsque la séquence de noeud de groupe ne contient pas le noeud de capteur, une intensité de signal reçu du paquet d'informations de groupe est supérieure à un seuil prédéterminé, et le nombre d'éléments de stockage des groupes candidats du noeud de capteur n'atteint pas une limite supérieure.

7. Appareil (2100) selon la revendication 6, dans lequel l'appareil comprend en outre :
une unité de transmission (2103) configurée pour transmettre par diffusion un paquet de données de retransmission et pour déclencher un premier minuteur lorsqu'un échec de transmission de données se produit dans le noeud de capteur ;
une première unité de traitement (2104) configurée pour estimer si le noeud de capteur reçoit, pendant le fonctionnement du premier minuteur, une réponse de réussite de transmission effectuée par un noeud de routeur, arrêter le premier minuteur s'il est estimé que « Oui », et déclencher un second minuteur s'il est jugé sur « Non » ; et
une seconde unité de traitement (2105) configurée pour estimer si le noeud de capteur reçoit, pendant le fonctionnement du second minuteur, une notification de réussite de transmission de sauvegarde, arrêter le second minuteur s'il est estimé que « Oui », sélectionner un groupe candidat parmi les groupes candidats stockés s'il est estimé que « Non », et transmettre les données collectées à un noeud de routeur du groupe candidat sélectionné, de façon à relayer les données collectées via le noeud de routeur du groupe candidat sélectionné,
dans lequel, de préférence, une durée du premier minuteur est une durée nécessaire pour transmettre des données sur une plage à deux sauts.

8. Appareil (2100) selon la revendication 6 ou 7, dans lequel l'appareil comprend en outre :
une unité de sauvegarde (2106) configurée pour, lorsque le noeud de capteur reçoit un paquet de données de retransmission transmis par diffusion par un autre noeud de capteur d'un groupe de noeuds dans lequel se trouve le noeud de capteur, sauvegarder le paquet de données de retransmission, et déclencher un troisième minuteur ;
une troisième unité de traitement (2107) configurée pour estimer si le noeud de capteur reçoit, pendant le fonctionnement du troisième minuteur, une réponse de réussite de transmission effectuée par un noeud de routeur, arrêter le troisième minuteur, et supprimer une sauvegarde du paquet de données de retransmission s'il est estimé que « Oui », et déclencher un minuteur de retrait s'il est estimé que « Non » ; et
une quatrième unité de traitement (2108) configurée pour estimer si le noeud de capteur reçoit, pendant le fonctionnement du minuteur de retrait, une notification de réussite de transmission de sauvegarde transmise par un noeud de routeur par diffusion, arrêter le minuteur de retrait et supprimer la sauvegarde du paquet de données de retransmission s'il est estimé que « Oui », et transmettre la sauvegarde du paquet de données de retransmission vers le noeud de routeur s'il est estimé que « Non »,
dans lequel, de préférence :
une durée du troisième minuteur est une durée nécessaire pour transmettre des données sur une plage à un saut ; ou
les durées des minuteurs de retrait des noeuds de capteurs sont aléatoires, et un intervalle entre les intervalles de sélection des durées des minuteurs de retrait des noeuds de capteurs est une durée nécessaire pour transmettre des données sur une plage à deux sauts.

9. Procédé de transmission de données, applicable à un noeud de capteur dans une zone de surveillance cible, le procédé comprenant :
la réception d'un paquet d'informations de groupe, le paquet d'informations de groupe comprenant des informations d'identification de groupe et une séquence de noeud de groupe ; et
le fait de rejoindre un groupe de noeuds indiqué par les informations d'identification de groupe ou de prendre un groupe de noeuds indiqué par les informations d'identification de groupe comme un groupe candidat, et la sauvegarde du groupe candidat selon le paquet d'informations de groupe reçu,
dans lequel la séquence de noeud de groupe contient les identifications des noeuds de capteurs contenus dans le groupe de noeuds,
dans lequel le noeud de capteur rejoint le groupe de noeuds indiqué par les informations d'identification de groupe lorsque la séquence de noeud de groupe contient le noeud de capteur ;
et le noeud de capteur prend le groupe de noeuds indiqué par les informations d'identification de groupe comme un groupe candidat et sauvegarde le groupe candidat lorsque la séquence de noeud de groupe ne contient pas le noeud de capteur, une intensité de signal reçu du paquet d'informations de groupe est supérieure à un seuil prédéterminé, et le nombre d'éléments de stockage des groupes candidats du noeud de capteur n'atteint pas une limite supérieure.

10. Procédé selon la revendication 9, dans lequel le procédé comprend :
la transmission par diffusion d'un paquet de données de transmission et le déclenchement d'un premier minuteur lorsqu'un échec de transmission de données se produit dans le noeud de capteur ;
l'arrêt du premier minuteur si le noeud de capteur reçoit, pendant le fonctionnement du premier minuteur, une réponse de réussite de transmission effectuée par un noeud de routeur ;
le déclenchement d'un second minuteur si le noeud de capteur ne reçoit pas, pendant le fonctionnement du premier minuteur, une réponse de réussite de transmission effectuée par un noeud de routeur ; et
la sélection d'un groupe candidat parmi les groupes candidats stockés si le noeud de capteur ne reçoit pas, pendant le fonctionnement du second minuteur, une notification de réussite de transmission de sauvegarde, et la transmission des données collectées à un noeud de routeur du groupe candidat sélectionné, de façon à relayer les données collectées via le noeud de routeur du groupe candidat sélectionné.

11. Procédé selon la revendication 9 ou 10, dans lequel
lorsque le noeud de capteur reçoit un paquet de données de retransmission transmis par diffusion par un autre noeud de capteur d'un groupe de noeuds dans lequel se trouve le noeud de capteur, le noeud de capteur sauvegarde le paquet de données de retransmission et déclenche un troisième minuteur ;
si le noeud de capteur reçoit, pendant le fonctionnement du troisième minuteur, une réponse de réussite de transmission effectuée par un noeud de routeur, le noeud de routeur arrête le troisième minuteur et supprime une sauvegarde du paquet de données de retransmission ;
si le noeud de capteur ne reçoit pas, pendant le fonctionnement du troisième minuteur, une réponse de réussite de transmission effectuée par un noeud de routeur, le noeud de routeur déclenche un minuteur de retrait ;
si le noeud de capteur reçoit, pendant le fonctionnement du minuteur de retrait, une notification de réussite de transmission de sauvegarde transmise par un noeud de routeur par diffusion, le noeud de capteur arrête le minuteur de retrait et supprime la sauvegarde du paquet de données de retransmission ;
et, si le noeud de capteur ne reçoit pas, pendant le fonctionnement du minuteur de retrait, une notification de réussite de transmission de sauvegarde transmise par un noeud de routeur par diffusion, le noeud de capteur transmet la sauvegarde du paquet de données de retransmission au noeud de routeur.
